(19) Europäisches Patentamt
European Patent Office
Office européen des brevets

(11) **EP 4 462 909 A1**

(12) **EUROPEAN PATENT APPLICATION**
published in accordance with Art. 153(4) EPC

(43) Date of publication:
**13.11.2024 Bulletin 2024/46**

(21) Application number: **22925617.7**

(22) Date of filing: **23.08.2022**

(51) International Patent Classification (IPC):
**H04W 72/04** (2023.01)

(52) Cooperative Patent Classification (CPC):
**H04W 72/04; H04W 72/0453; H04W 74/08**

(86) International application number:
**PCT/CN2022/114140**

(87) International publication number:
**WO 2023/151258 (17.08.2023 Gazette 2023/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.02.2022 CN 202210130601**

(71) Applicant: **Huawei Technologies Co., Ltd.
Shenzhen, Guangdong 518129 (CN)**

(72) Inventors:
• **WEN, Ronghui
Shenzhen, Guangdong 518129 (CN)**
• **YU, Zheng
Shenzhen, Guangdong 518129 (CN)**
• **JIN, Zhe
Shenzhen, Guangdong 518129 (CN)**
• **TIE, Xiaolei
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57) Embodiments of this application disclose a communication method and apparatus. According to the method, a terminal device determines a random access resource, where a quantity of frequency domain resources of the random access resource is greater than a quantity of frequency domain resources of a maximum bandwidth of the terminal device, and sends a physical random access channel PRACH on the random access resource. Because the determined random access resource can meet a resource requirement for PRACH transmission, communication between the terminal device and an access network device can be ensured.

FIG. 2

## Description

This application claims priority to Chinese Patent Application No. 202210130601.9, filed with the China National Intellectual Property Administration on February 11, 2022 and entitled "COMMUNICATION METHOD AND APPARATUS", which is incorporated herein by reference in its entirety.

## TECHNICAL FIELD

Embodiments of this application relate to the field of communication technologies, and in particular, to a communication method and apparatus.

## BACKGROUND

Mobile communication technologies have profoundly changed people's life, but people expect mobile communication technologies with higher performance. To cope with explosive growth of mobile data traffic, device connections of massive mobile communication, and various new services and application scenarios constantly emerging, the fifth generation (the fifth generation, 5G) mobile communication system comes into being. The international telecommunication union (international telecommunication union, ITU) defines three major application scenarios for 5G and future mobile communication systems: enhanced mobile broadband (enhanced mobile broadband, eMBB), ultra-reliable and low-latency communication (ultra-reliable and low-latency communication, URLLC), and massive machine type communications (massive machine type communications, mMTC).

Typical eMBB services include ultra high-definition video, augmented reality (augmented reality, AR), virtual reality (virtual reality, VR), and the like. These services are mainly characterized by a large data transmission amount and a very high transmission rate. Typical URLLC services include wireless control in industrial manufacturing or production processes, motion control of self-driving cars and unmanned aircraft, tactile interaction applications such as remote repair, remote surgery, and the like. These services are mainly characterized by ultra-high reliability, low latency, and a small data transmission amount. Typical mMTC services include smart grid distribution automation, smart cities, and the like. These services are mainly characterized by a huge quantity of connected network devices, a small data transmission amount, and insensitivity of data to transmission latency. These mMTC terminal devices need to satisfy requirements of low costs and extremely long standby duration.

With continuous development of communication technologies, fewer frequency domain resources are available to terminal devices. Before communicating with an access network device, the terminal device needs to access the access network device through a physical random access channel (physical random access channel, PRACH). However, a decrease in frequency domain resources results in fewer frequency domain resources available for the terminal device for information transmission. Consequently, the resources cannot meet PRACH transmission requirements.

## SUMMARY

Embodiments of this application disclose a communication method and apparatus, to ensure that there are sufficient resources for PRACH transmission to ensure communication between a terminal device and an access network device.

According to a first aspect, this application discloses a communication method. The communication method may be applied to a terminal device, or may be applied to a module (for example, a chip) in the terminal device. The following uses an example in which the method is performed by a terminal device for description. The communication method may include: determining, by a terminal device, a random access resource, where a quantity of frequency domain resources of the random access resource is greater than a quantity of frequency domain resources of a maximum transmission bandwidth of the terminal device; and sending, by the terminal device, a PRACH on the random access resource. When a bandwidth resource of the terminal device cannot meet a transmission requirement of the PRACH, the terminal device may determine the random access resource. The quantity of frequency domain resources of the random access resource is greater than the quantity of frequency domain resources of the maximum bandwidth of the terminal device, so that sufficient resources for transmission of the PRACH can be ensured, and the terminal device can access the access network device through the PRACH, ensuring communication between the terminal device and the access network device.

In a possible implementation, the terminal device may determine the random access resource based on a first parameter and a first reference point. For example, the first reference point may be a carrier resource, a point A, a common resource block (common resource block, CRB) 0, or a bandwidth part (bandwidth part, BWP) resource of the terminal device. For example, the first parameter may indicate an offset value between the random access resource and the first reference point, or may indicate a location relationship between the random access resource and the first reference point.

When the meaning of the first parameter, the first parameter, and the first reference point are definite, the random access resource for transmission of the PRACH may be accurately determined based on the first parameter and the first reference point, improving accuracy of determining the random access resource. When the meaning of the first parameter, the first parameter, and the first reference point are definite, it can be ensured that a random access resource determined by the terminal device is the same as a random access resource determined by the access network device, ensuring that the PRACH sent by the terminal device can be successfully received by the access network device. Further, the first reference point is a frequency domain resource in conventional technologies, rather than a frequency domain resource additionally determined, improving compatibility with the conventional technologies. When the first reference point is a carrier resource, the random access resource may not be limited to a BWP of the terminal device, but may be within a carrier resource range. This can extend a selection range of the random access resource, improving flexibility of determining the random access resource. When the first reference point is a point A (or a CRB 0), the random access resource may not be limited to a carrier and a BWP of the terminal device, but may be within a system resource range. This can extend a selection range of the random access resource, improving flexibility of determining the random access resource. When the first reference point is a BWP resource of the terminal device, because the random access resource overlaps a BWP of the terminal device, the terminal device does not need to perform tuning between the PRACH and a data channel, reducing power consumption of the terminal device, improving PRACH transmission efficiency, and shortening PRACH transmission latency.

In a possible implementation, the communication method may further include: receiving, by the terminal device, the first parameter. The first parameter may be configured or indicated by the access network device. The terminal device may determine the first parameter based on the configuration or the indication of the access network device, and then may determine, based on the first parameter, the random access resource for transmission of the PRACH. The access network device may configure or indicate different first parameters in different cases, in different scenarios, or at different times, instead of configuring or indicating a fixed first parameter. This can improve flexibility of configuring or indicating the first parameter, and can improve applicability of the first parameter.

In a possible implementation, the BWP of the terminal device does not include A frequency domain resources with highest sequence numbers in the carrier, a start resource of the random access resource is the same as a start resource of the BWP of the terminal device, and an end resource of the random access resource is after an end resource of the BWP of the terminal device; or the BWP of the terminal device includes A frequency domain resources with highest sequence numbers in the carrier, a start resource of the random access resource is before a start resource of the BWP of the terminal device, and an end resource of the random access resource is the same as an end resource of the BWP of the terminal device; or the BWP of the terminal device does not include A frequency domain resources with lowest sequence numbers in the carrier, a start resource of the random access resource is before a start resource of the BWP of the terminal device, and an end resource of the random access resource is the same as an end resource of the BWP of the terminal device; or the BWP of the terminal device includes A frequency domain resources with lowest sequence numbers in the carrier, a start resource of the random access resource is the same as a start resource of the BWP of the terminal device, and an end resource of the random access resource is after an end resource of the BWP of the terminal device. For example, A is a positive integer greater than 0.

When a quantity of frequency domain resources of the transmission resource needed by the PRACH is greater than the quantity of frequency domain resources of the maximum transmission bandwidth of the terminal device, the terminal device may determine information about the carrier and information about the BWP of the terminal device based on information broadcast by the access network device, and then determine, based on the information about the carrier and the information about the BWP of the terminal device, whether the BWP of the terminal device includes A frequency domain resources with lowest or highest sequence numbers in the carrier, so as to determine the random access resource for transmission of the PRACH within a transmission bandwidth range of the carrier instead of a guard band of the carrier, avoiding interference with an adjacent channel or a neighboring cell. In addition, the terminal device may accurately determine the random access resource based on whether the BWP of the terminal device includes the A frequency domain resources with the lowest or highest sequence numbers in the carrier, and the access network device does not need to additionally configure or send other information, reducing an amount of information transmitted or a quantity of information transmissions, and saving transmission resources. That the BWP of the terminal device does not include A frequency domain resources with highest sequence numbers in the carrier may be understood as that the BWP of the terminal device is not located on an upper edge of the carrier. For example, the BWP of the terminal device may be located on a lower edge or in the middle of the carrier. That the BWP of the terminal device includes A frequency domain resources with highest sequence numbers in the carrier may be understood as that the BWP of the terminal device is located on an upper edge of the carrier. That the BWP of the terminal device does not include A frequency domain resources with lowest sequence numbers in the carrier may be understood as that the BWP of the terminal device is not located on a lower edge of the carrier. For example, the BWP of the terminal device may be located on an upper edge or in the middle of a carrier. That the BWP of the terminal device includes A frequency domain resources with lowest sequence numbers in the carrier may be understood as that the BWP of the terminal device is located on a lower edge of the carrier.

In a possible implementation, the quantity of frequency domain resources of the random access resource may include a quantity of frequency domain resources of a first resource and a quantity of frequency domain resources of a second resource, a random access preamble sequence is carried on the PRACH, and the sending, by the terminal device, a PRACH on the random access resource may include: sending a first PRACH on a frequency domain resource corresponding to the quantity of frequency domain resources of the first resource, and sending a second PRACH on a frequency domain resource corresponding to the quantity of frequency domain resources of the second resource. For example, a first part of the random access preamble sequence is carried on the first PRACH, a second part of the random access preamble sequence is carried on the second PRACH, and the first part and the second part are a part or all of the random access preamble sequence.

When the quantity of frequency domain resources of the transmission resource needed by the PRACH is greater than the quantity of frequency domain resources of the maximum transmission bandwidth of the terminal device, the PRACH cannot be transmitted in the BWP of the terminal device. Therefore, the quantity of frequency domain resources of the random access resource may be split into two parts. A frequency domain resource corresponding to each part of the quantity of frequency domain resources is used for transmission of one PRACH, and each PRACH carries a part of the random access preamble sequence, so that the access network device can receive the random access preamble sequence sent by the terminal device, and allow access of the terminal device based on the random access preamble sequence. In this way, normal access of the terminal device can be ensured when the quantity of frequency domain resources of the transmission resource needed by the PRACH is greater than the quantity of frequency domain resources of the BWP of the terminal device. In this manner, a quantity of frequency domain resources of each part can be less than or equal to the quantity of frequency domain resources of the BWP of the terminal device, and BWP resources of the terminal device are sufficient for transmitting each PRACH, ensuring that the PRACH can be transmitted in the BWP of the terminal device, and improving compatibility with an existing protocol.

In a possible implementation, the random access resource may include a first resource and a second resource, the quantity of frequency domain resources of the random access resource may include a quantity of frequency domain resources of the first resource and a quantity of frequency domain resources of the second resource, a difference between a time domain resource of the first resource and a time domain resource of the second resource is k time units, and k is an integer greater than or equal to 1. To ensure that the terminal device has sufficient time to perform frequency tuning between the two PRACHs, there may be a difference of k time units between time domain resources for transmission of the two PRACHs, so that a guard period may be reserved for the terminal device between transmitting the first PRACH and transmitting the second PRACH, avoiding transmitting only a part of the PRACH due to limited channel bandwidth of the terminal device.

According to a second aspect, this application discloses a communication method. For beneficial effects, refer to the descriptions in the first aspect. Details are not described herein again. The communication method may be applied to an access network device, or may be applied to a module (for example, a chip) in the access network device. The following uses an example in which the method is performed by an access network device for description. The communication method may include: determining, by an access network device, a random access resource, where a quantity of frequency domain resources of the random access resource is greater than a quantity of frequency domain resources of a maximum transmission bandwidth of a terminal device; and receiving, by the access network device, a PRACH on the random access resource.

In a possible implementation, the access network device may determine the random access resource based on a first parameter and a first reference point. For example, the first reference point may be a carrier resource, a point A, a CRB 0, or a BWP resource of the terminal device. For example, the first parameter may indicate an offset value between the random access resource and the first reference point, or may indicate a location relationship between the random access resource and the first reference point.

In a possible implementation, the communication method may further include: sending, by the access network device, the first parameter.

In a possible implementation, the BWP of the terminal device does not include A frequency domain resources with highest sequence numbers in the carrier, a start resource of the random access resource is the same as a start resource of the BWP of the terminal device, and an end resource of the random access resource is after an end resource of the BWP of the terminal device; or the BWP of the terminal device includes A frequency domain resources with highest sequence numbers in the carrier, and it is determined that a start resource of the random access resource is before a start resource of the BWP of the terminal device, and an end resource of the random access resource is the same as an end resource of the BWP of the terminal device; or the BWP of the terminal device does not include A frequency domain resources with lowest sequence numbers in the carrier, and it is determined that a start resource of the random access resource is before a start resource of the BWP of the terminal device, and an end resource of the random access resource is the same as an end resource of the BWP of the terminal device; or the BWP of the terminal device includes A frequency domain resources with lowest sequence numbers in the carrier, and it is determined that a start resource of the random access resource is the same as a start resource of the BWP of the terminal device, and an end resource of the random access resource is after an end resource of the BWP of the terminal device. For example, A is a positive integer greater than 0.

In a possible implementation, the quantity of frequency domain resources of the random access resource may include a quantity of frequency domain resources of a first resource and a quantity of frequency domain resources of a second resource, a random access preamble sequence is carried on the PRACH, and the receiving, by the access network device, a PRACH on the random access resource includes: receiving a first PRACH on a frequency domain resource corresponding to the quantity of frequency domain resources of the first resource, and receiving a second PRACH on a frequency domain resource corresponding to the quantity of frequency domain resources of the second resource. For example, a first part of the random access preamble sequence is carried on the first PRACH, a second part of the random access preamble sequence is carried on the second PRACH, and the first part and the second part are a part or all of the random access preamble sequence.

In a possible implementation, the random access resource may include a first resource and a second resource, the quantity of frequency domain resources of the random access resource may include a quantity of frequency domain resources of the first resource and a quantity of frequency domain resources of the second resource, a difference between a time domain resource of the first resource and a time domain resource of the second resource may be k time units, and k is an integer greater than or equal to 1.

According to a third aspect, this application discloses a communication method. The communication method may be applied to a terminal device, or may be applied to a module (for example, a chip) in the terminal device. The following uses an example in which the method is performed by a terminal device for description. The communication method may include: determining a random access resource, where a quantity of frequency domain resources of the random access resource is equal to a quantity of frequency domain resources of a maximum transmission bandwidth of a terminal device; and sending, by the terminal device, a PRACH on the random access resource. When a bandwidth resource of the terminal device cannot meet a resource requirement for transmission of the PRACH, the terminal device may determine the quantity of frequency domain resources of the random access resource to be equal to the quantity of frequency domain resources of the maximum bandwidth of the terminal device, so that the bandwidth resource can meet the resource requirement for transmission of the PRACH, ensuring communication between the terminal device and the access network device.

In a possible implementation, the quantity of frequency domain resources of the random access resource being equal to the quantity of frequency domain resources of the maximum transmission bandwidth of the terminal device may include: the quantity of frequency domain resources of the random access resource is the same as a quantity of frequency domain resources of a BWP of the terminal device, or the random access resource is the same as a BWP resource of the terminal device.

In a possible implementation, the quantity of frequency domain resources of the BWP of the terminal device is 12 resource blocks (resource blocks, RBs).

According to a fourth aspect, this application discloses a communication method. For beneficial effect, refer to descriptions in the third aspect. Details are not described herein again. The communication method may be applied to an access network device, or may be applied to a module (for example, a chip) in the access network device. The following uses an example in which the method is performed by an access network device for description. The communication method may include: determining, by an access network device, a random access resource, where a quantity of frequency domain resources of the random access resource is equal to a quantity of frequency domain resources of a maximum transmission bandwidth of a terminal device; and receiving, by the access network device, a PRACH on the random access resource.

In a possible implementation, the quantity of frequency domain resources of the random access resource being equal to the quantity of frequency domain resources of the maximum transmission bandwidth of the terminal device may include: the quantity of frequency domain resources of the random access resource is the same as a quantity of frequency domain resources of a BWP of the terminal device, or the random access resource is the same as a BWP resource of the terminal device.

In a possible implementation, the quantity of frequency domain resources of the BWP of the terminal device is 12 RBs.

According to a fifth aspect, this application discloses a communication method. The communication method may be applied to a terminal device, or may be applied to a module (for example, a chip) in the terminal device. The following uses an example in which the method is performed by a terminal device for description. The communication method may include: A terminal device determines a first resource based on a second parameter and a second offset, where the second offset is an offset of a physical resource block (physical resource block, PRB) in the case of calculation of a transmission resource of a physical uplink control channel (physical uplink control channel, PUCCH); and the terminal device sends a PUCCH on the first resource. For example, the second parameter may be one or more of the following: 0, 2, 3, 4, -2, -3, -4,

$$N_{BWP}^{size} -$$

$$1 - 2\text{RB}_{\text{BWP}}^{\text{offset}} - 2\lfloor r_{\text{PUCCH}}/N_{\text{CS}}\rfloor \;,\quad N_{\text{BWP}}^{\text{size}} - 3 - 2\text{RB}_{\text{BWP}}^{\text{offset}} - 2\lfloor r_{\text{PUCCH}}/N_{\text{CS}}\rfloor \;,\quad N_{\text{BWP}}^{\text{size}} - 4 -$$

$$2\text{RB}_{\text{BWP}}^{\text{offset}} - 2\lfloor r_{\text{PUCCH}}/N_{\text{CS}}\rfloor \;,\quad N_{\text{BWP}}^{\text{size}} - 5 - 2\text{RB}_{\text{BWP}}^{\text{offset}} - 2\lfloor r_{\text{PUCCH}}/N_{\text{CS}}\rfloor \;,\quad N_{\text{BWP}}^{\text{size}} - 7 -$$

$$2\text{RB}_{\text{BWP}}^{\text{offset}} - 2\lfloor r_{\text{PUCCH}}/N_{\text{CS}}\rfloor \;,\quad N_{\text{BWP}}^{\text{size}} + 1 - 2\text{RB}_{\text{BWP}}^{\text{offset}} - 2\lfloor r_{\text{PUCCH}}/N_{\text{CS}}\rfloor \;,\quad N_{\text{BWP}}^{\text{size}} + 2 -$$

$$2\text{RB}_{\text{BWP}}^{\text{offset}} - 2\lfloor r_{\text{PUCCH}}/N_{\text{CS}}\rfloor, \text{ and } N_{\text{BWP}}^{\text{size}} + 3 - 2\text{RB}_{\text{BWP}}^{\text{offset}} - 2\lfloor r_{\text{PUCCH}}/N_{\text{CS}}\rfloor. \quad N_{BWP}^{size}$$ represents a quantity of frequency domain resources or a quantity of RBs included in a BWP of the terminal device, $RB_{BWP}^{offset}$ represents the second offset, $r_{PUCCH}$ represents an index of the transmission resource of the PUCCH, $N_{CS}$ represents a quantity of cyclic indexes included in one RB, and $\lfloor \cdot \rfloor$ represents rounding down. For example, feedback information for a message 4 (message 4, Msg4) is carried on the PUCCH, and the Msg 4 is used for contention resolution.

A resource for transmission of the feedback information for the Msg4 is determined based on the second parameter and the second offset. An offset to the second parameter is added on the basis of the conventional technology, and possible values of the second parameter are provided. A resource for transmission of feedback information for a Msg4 by a reduced capability (reduced capability, RedCap) terminal device is staggered with a resource for transmission of feedback information for a Msg4 by a non-RedCap terminal device as much as possible, avoiding a resource conflict.

In a possible implementation, the terminal device may determine the first resource based on the second parameter, the second offset, $r_{PUCCH}$, and $N_{CS}$.

In a possible implementation, the terminal device may determine the first resource based on $N_{BWP}^{size}$, $r_{PUCCH}$, $N_{CS}$, the second parameter, and the second offset.

According to a sixth aspect, this application discloses a communication method. For beneficial effect, refer to descriptions in the fifth aspect. Details are not described herein again. The communication method may be applied to an access network device, or may be applied to a module (for example, a chip) in the access network device. The following uses an example in which the method is performed by an access network device for description. The communication method may include: An access network device determines a first resource based on a second parameter and a second offset, where the second offset is an offset of a PRB in the case of calculation of a transmission resource of a PUCCH; and the access network device receives a PUCCH on the first resource. For example, the second parameter may be one or more of the following: 0, 2, 3, 4, -2, -3, -4, $N_{BWP}^{size} - 1 - 2\text{RB}_{\text{BWP}}^{\text{offset}} - 2\lfloor r_{\text{PUCCH}}/N_{\text{CS}}\rfloor$, $N_{\text{BWP}}^{\text{size}} - 3 -$

$$2\text{RB}_{\text{BWP}}^{\text{offset}} - 2\lfloor r_{\text{PUCCH}}/N_{\text{CS}}\rfloor \;,\quad N_{\text{BWP}}^{\text{size}} - 4 - 2\text{RB}_{\text{BWP}}^{\text{offset}} - 2\lfloor r_{\text{PUCCH}}/N_{\text{CS}}\rfloor \;,\quad N_{\text{BWP}}^{\text{size}} - 5 -$$

$$2\text{RB}_{\text{BWP}}^{\text{offset}} - 2\lfloor r_{\text{PUCCH}}/N_{\text{CS}}\rfloor \;,\quad N_{\text{BWP}}^{\text{size}} - 7 - 2\text{RB}_{\text{BWP}}^{\text{offset}} - 2\lfloor r_{\text{PUCCH}}/N_{\text{CS}}\rfloor \;,\quad N_{\text{BWP}}^{\text{size}} + 1 -$$

$$2\text{RB}_{\text{BWP}}^{\text{offset}} - 2\lfloor r_{\text{PUCCH}}/N_{\text{CS}}\rfloor \;,\quad N_{\text{BWP}}^{\text{size}} + 2 - 2\text{RB}_{\text{BWP}}^{\text{offset}} - 2\lfloor r_{\text{PUCCH}}/N_{\text{CS}}\rfloor \;,\text{ and}$$

$$N_{\text{BWP}}^{\text{size}} + 3 - 2\text{RB}_{\text{BWP}}^{\text{offset}} - 2\lfloor r_{\text{PUCCH}}/N_{\text{CS}}\rfloor. \quad N_{BWP}^{size}$$ represents a quantity of frequency domain resources or a quantity of RBs included in a BWP of a terminal device, $RB_{BWP}^{offset}$ represents the second offset, $r_{PUCCH}$ represents an index of the transmission resource of the PUCCH, $N_{CS}$ represents a quantity of cyclic indexes included in one RB, and $\lfloor \cdot \rfloor$ represents rounding down. For example, feedback information for a Msg4 is carried on the PUCCH, and the Msg4 is used for contention resolution.

In a possible implementation, the access network device may determine the first resource based on the second parameter, the second offset, $r_{PUCCH}$, and $N_{CS}$.

In a possible implementation, the terminal device may determine the first resource based on $N_{BWP}^{size}$, $r_{PUCCH}$, $N_{CS}$, the second parameter, and the second offset.

According to a seventh aspect, this application discloses a communication apparatus. For beneficial effect, refer to descriptions in the first aspect (or the third aspect). Details are not described herein again. The communication apparatus has a function of implementing an action in the method example in the first aspect (or the third aspect). The function may be implemented by hardware, or may be implemented by hardware executing corresponding software. The hardware or the software includes one or more modules corresponding to the foregoing function. In a possible design, the communication apparatus includes: a processing module, configured to determine a random access resource; and a transceiver module, configured to send a PRACH on the random access resource. These modules may perform corresponding functions in the method example in the first aspect (or the third aspect). For details, refer to the detailed descriptions in the method example. Details are not described herein again.

According to an eighth aspect, this application discloses a communication apparatus. For beneficial effect, refer to descriptions in the second aspect (or the fourth aspect). Details are not described herein again. The communication apparatus has a function of implementing an action in the method example in the second aspect (or the fourth aspect). The function may be implemented by hardware, or may be implemented by hardware executing corresponding software. The hardware or the software includes one or more modules corresponding to the foregoing function. In a possible design, the communication apparatus includes: a processing module, configured to determine a random access resource; and a transceiver module, configured to receive a PRACH on the random access resource. These modules may perform corresponding functions in the method example in the second aspect (or the fourth aspect). For details, refer to the detailed descriptions in the method example. Details are not described herein again.

According to a ninth aspect, this application discloses a communication apparatus. For beneficial effect, refer to descriptions in the fifth aspect. Details are not described herein again. The communication apparatus has a function of implementing an action in the method example in the fifth aspect. The function may be implemented by hardware, or may be implemented by hardware executing corresponding software. The hardware or the software includes one or more modules corresponding to the foregoing function. In a possible design, the communication apparatus includes: a processing module, configured to determine a first resource based on a second parameter and a second offset; and a transceiver module, configured to send a PUCCH on the first resource. These modules may perform corresponding functions in the method example in the fifth aspect. For details, refer to the detailed descriptions in the method example. Details are not described herein again.

According to a tenth aspect, this application discloses a communication apparatus. For beneficial effect, refer to descriptions in the sixth aspect. Details are not described herein again. The communication apparatus has a function of implementing an action in the method example in the sixth aspect. The function may be implemented by hardware, or may be implemented by hardware executing corresponding software. The hardware or the software includes one or more modules corresponding to the foregoing function. In a possible design, the communication apparatus includes: a processing module, configured to determine a first resource based on a second parameter and a second offset; and a transceiver module, configured to receive a PUCCH on the first resource. These modules may perform corresponding functions in the method example in the sixth aspect. For details, refer to the detailed descriptions in the method example. Details are not described herein again.

According to an eleventh aspect, this application discloses a communication apparatus. The communication apparatus may be the terminal device in the foregoing method embodiments, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is caused to perform the method performed by the terminal device in the foregoing method embodiments.

According to a twelfth aspect, this application discloses a communication apparatus. The communication apparatus may be the access network device in the method embodiments or a chip disposed in the access network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is caused to perform the method performed by the access network device in the foregoing method embodiments.

According to a thirteenth aspect, this application discloses a computer program product. The computer program product includes computer program code. When the computer program code is run, the method performed by the terminal device in the foregoing aspects is performed.

According to a fourteenth aspect, this application discloses a computer program product. The computer program product includes computer program code. When the computer program code is run, the method performed by the access network device in the foregoing aspects is performed.

According to a fifteenth aspect, this application discloses a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete component.

According to a sixteenth aspect, this application discloses a chip system. The chip system includes a processor, configured to implement functions of the access network device in the methods in the foregoing aspects. In a possible design, the chip system further includes a memory, configured to store program instructions and/or data. The chip system may include a chip, or may include a chip and another discrete component.

According to a seventeenth aspect, this application discloses a computer-readable storage medium. The computer-readable storage medium stores a computer program. When the computer program is run, the method performed by the terminal device in the foregoing aspects is implemented.

According to an eighteenth aspect, this application discloses a computer-readable storage medium. The computer-readable storage medium stores a computer program. When the computer program is run, the method performed by the access network device in the foregoing aspects is implemented.

**BRIEF DESCRIPTION OF DRAWINGS**

FIG. 1 is a diagram of a network architecture according to an embodiment of this application;
FIG. 2 is a schematic flowchart of a communication method according to an embodiment of this application;
FIG. 3 is a diagram of a random access resource and a first reference point according to an embodiment of this application;
FIG. 4 is another diagram of a random access resource and a first reference point according to an embodiment of this application;
FIG. 5 is a diagram of a random access resource and a BWP of a terminal device according to an embodiment of this application;
FIG. 6 is another diagram of a random access resource and a BWP of a terminal device according to an embodiment of this application;
FIG. 7 is still another diagram of a random access resource and a BWP of a terminal device according to an embodiment of this application;
FIG. 8 is a diagram in which k is 2 according to an embodiment of this application;
FIG. 9 is a diagram in which k is -7 according to an embodiment of this application;
FIG. 10 is a diagram in which k is -4 according to an embodiment of this application;
FIG. 11 is a diagram in which k is 0 according to an embodiment of this application;
FIG. 12 is another diagram in which k is 2 according to an embodiment of this application;
FIG. 13 is a diagram of determining a random access resource according to a first rule according to an embodiment of this application;
FIG. 14 is a diagram of combining two ROs into one RO according to an embodiment of this application;
FIG. 15 is a diagram of cross mapping of time domain resources according to an embodiment of this application;
FIG. 16 is a diagram of a time domain resource of a first resource and a time domain resource of a second resource according to an embodiment of this application;
FIG. 17 is another diagram of a time domain resource of a first resource and a time domain resource of a second resource according to an embodiment of this application;
FIG. 18 is a schematic flowchart of another communication method according to an embodiment of this application;
FIG. 19 is a diagram of performing PUCCH transmission through frequency hopping according to an embodiment of this application;
FIG. 20 is a diagram in which frequency domain resources of a PUCCH resource are on one side of a BWP of a terminal device according to an embodiment of this application;
FIG. 21 is a schematic flowchart of still another communication method according to an embodiment of this application;
FIG. 22 is a diagram of using a start resource of a BWP of a terminal device as a reference point according to an embodiment of this application;
FIG. 23 is a diagram of using an end resource of a BWP of a terminal device as a reference point according to an embodiment of this application;
FIG. 24 is a diagram of a structure of a communication apparatus according to an embodiment of this application; and

FIG. 25 is a diagram of a structure of another communication apparatus according to an embodiment of this application.

## DESCRIPTION OF EMBODIMENTS

The following describes technical solutions of embodiments in this application with reference to accompanying drawings.

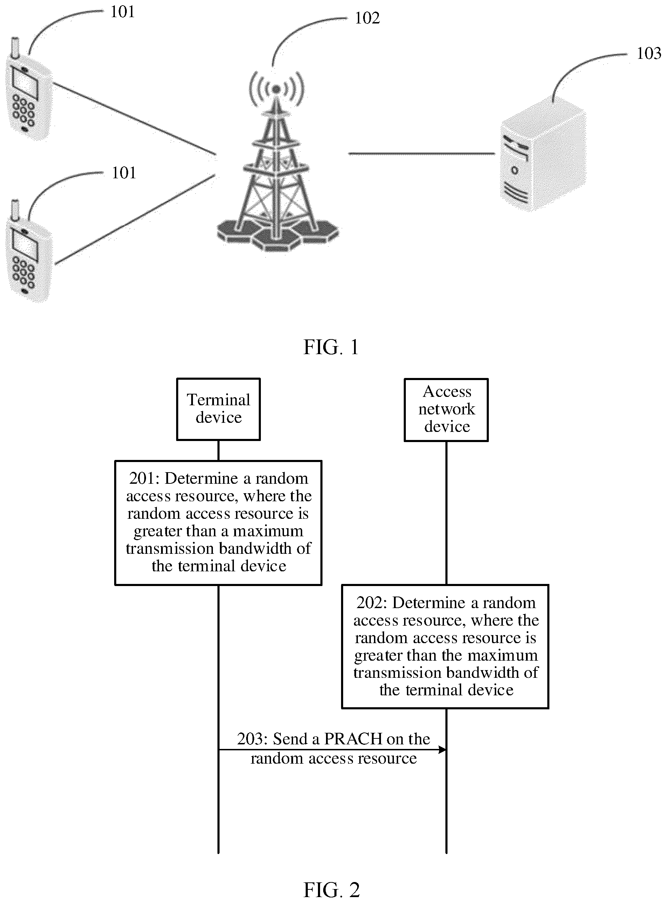

The following first describes the network architecture in embodiments of this application, to better understand embodiments of this application. FIG. 1 is a diagram of a network architecture according to an embodiment of this application. As shown in FIG. 1, the network architecture may include one or more terminal devices 101, an access network device 102, and a core network device 103. The terminal device 101 may be connected to the access network device 102 in a wireless manner, and the access network device 102 may be connected to the core network device 103 in a wireless or wired manner. The core network device 103 and the access network device 102 may be different independent physical devices, functions of the core network device 103 and logical functions of the access network device 102 may be integrated into one physical device, or some functions of the core network device 103 and some functions of the access network device 102 may be integrated into one physical device. The terminal device 101 may be stationary, or may be mobile.

The terminal device may be a wireless terminal device capable of receiving scheduling and indication information of the access network device. The wireless terminal device may be a device that provides users with voice and/or data connectivity, a handheld device with a wireless connection function, or another processing device connected to a wireless modem. The terminal device may communicate with one or more core networks or the Internet via a radio access network (radio access network, RAN).

The terminal device 101 and the access network device 102 may be deployed on the land, including indoors or outdoors, may be handheld or vehicle-mounted, may be deployed on a water surface, or may be deployed on an airplane, a balloon, and a satellite in the air. Application scenarios of the terminal device 101 and the access network device 102 are not limited in this application.

The terminal device may also be referred to as user equipment (user equipment, UE), a mobile station (mobile station, MS), a mobile terminal (mobile terminal, MT), or the like. The terminal device may be a handheld terminal, a customer premises equipment (customer premises equipment, CPE), a notebook computer, a subscriber unit (subscriber unit), a cellular phone (cellular phone), a smartphone (smartphone), a computing device, a wireless data card, a personal digital assistant (personal digital assistant, PDA) computer, a tablet computer, a wireless modem (modem), a handheld device (handheld), a laptop computer (laptop computer), a session initiation protocol (session initiation protocol, SIP) phone, a cordless phone (cordless phone), or a wireless local loop (wireless local loop, WLL) station, a machine type communication (machine type communication, MTC) terminal, a wearable device (such as a smart watch, a smart band, and a pedometer), a vehicle-mounted device (such as a car, a bicycle, an electric vehicle, an airplane, a ship, a train, and a high-speed train), a VR device, an AR device, a wireless terminal in industrial control (industrial control), a smart home device (such as a refrigerator, a TV, an air conditioner, and an electric meter), a smart robot, a workshop device, a wireless terminal in self driving (self driving), a wireless terminal in remote surgery (remote medical surgery) a wireless data card, a wireless terminal in a smart grid (smart grid), a wireless terminal in transportation safety (transportation safety), a wireless terminal in a smart city (smart city), a wireless terminal in a smart home (smart home), flying equipment (such as a smart robot, a hot air balloon, an uncrewed aerial vehicle, or an airplane), or another device that can access a network.

In addition, the terminal device may also be a terminal device in a future communication system (for example, a 6th generation mobile communication technology (6th generation mobile communication technology, 6G)) communication system, a terminal device in a future evolved public land mobile network (public land mobile network, PLMN), or the like. For example, a 6G network may further extend a form and a function of a terminal device of 5G communication, and a 6G terminal device includes but is not limited to a vehicle, a cellular network terminal device (integrating a function of a satellite terminal), an uncrewed aerial vehicle, and an internet of things (internet of things, IoT).

The access network device is a device that provides radio access for the terminal device, and may be responsible for functions such as radio resource management on an air interface side, quality of service (quality of service, QoS) flow management, and data compression and encryption. The access network device may be a base station (base transceiver station, BTS) in a global system for mobile communications (global system for mobile communications, GSM) system or a code division multiple access (code division multiple access, CDMA) system, a NodeB (NodeB, NB) in a wideband code division multiple access (wideband code division multiple access, WCDMA) system, an evolved NodeB (evolved NodeB, eNB, or eNodeB) in an LTE system, or a radio controller in a cloud radio access network (cloud radio access network, CRAN) scenario. Alternatively, the access network device may be a relay station, an access point, an in-vehicle device, a wearable device, an access network device in a 5G network, an access network device in a future evolved PLMN network, an antenna panel or an antenna panel group (including a plurality of antenna panels) of a base station in a 5G system, or a network node that forms a gNB or a transmission point, for example, a baseband unit (baseband unit, BBU) or a distributed unit (distributed unit, DU). This is not limited in embodiments of this application.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in a RAN, or an access network device in a core network (core network, CN). This is not limited in this application.

A core network device is a device in a CN that provides service support for a terminal device, and is mainly responsible for call connection, charging, mobility management, user connection, user management, and service bearer completion. The core network device may correspond to different devices in different communication systems. For example, in the 4th generation mobile communication technology (4th generation mobile network, 4G), the core network device may correspond to one or more of a mobility management entity (mobility management entity, MME), a serving gateway (serving gateway, S-GW), and the like. For another example, in 5G, the core network device may correspond to one or more network elements of an access and mobility management function (access and mobility management function, AMF) network element, a session management function (session management function, SMF) network element, a user plane function (user plane function, UPF) network element, and the like. In a next-generation communication system or a future communication device, the core network device may be one or more network elements, devices, or entities that can provide service support for a terminal device.

It should be noted that the network architecture shown in FIG. 1 is not limited to including only the terminal devices, the access network device, and the core network device shown in the figure, and may further include a wireless relay device and a wireless backhaul device. Details are not enumerated herein in this application. In addition, quantities of core network devices, radio access network devices, and terminal devices are not limited in embodiments of this application.

The foregoing network architecture may be applied to narrow band internet of things (narrow band-internet of things, NB-IoT) system, a global system for mobile communications (global system for mobile communications, GSM) system, an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a Wi-Fi system, an LTE system, a 5G system, and a communication system like a 6G system evolved from 5G.

The following first describes related technologies in embodiments of this application, to better understand embodiments of this application.

Currently, in the standard, a terminal device of an mMTC service is referred to as a RedCap terminal device, that is, a low-complexity or low-capability terminal device. The RedCap terminal device may be less complex than other terminal devices in terms of bandwidth, power consumption, and a quantity of antennas, for example, the RedCap terminal device has a narrower bandwidth, lower power consumption, and a smaller quantity of antennas. The RedCap terminal device may also be referred to as a new radio (new radio, NR) light (NR light, NRL) terminal device, that is, a light terminal device.

For example, in the frequency range (frequency range, FR) 1, a maximum channel bandwidth of an eMBB terminal device is 100 MHz, and a maximum channel bandwidth of a RedCap terminal device is reduced to 5 MHz. Therefore, a quantity of resource blocks (resource block, RB) $N_{RB}$ corresponding to the configured maximum transmission bandwidth may be shown in Table 1.

**Table 1 $N_{RB}$ corresponding to a configured maximum transmission bandwidth**

| SCS (kHz) | 5 | 10 | 15 | 20 | 25 | 30 | 40 | 50 | 60 | 70 | 80 | 90 | 100 |
|---|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 216 | 270 | N/A | N/A | N/A | N/A | N/A |
| 30 | 11 | 24 | 38 | 51 | 65 | 78 | 106 | 133 | 162 | 189 | 217 | 245 | 273 |
| 60 | N/A | 11 | 18 | 24 | 31 | 38 | 51 | 65 | 79 | 93 | 107 | 121 | 135 |

When a subcarrier spacing (sub carrier space, SCS) of a physical uplink shared channel (physical uplink share channel, PUSCH) is 30 kHz, and the maximum channel bandwidth of the terminal device is 5 MHz, the maximum transmission bandwidth of the terminal device corresponds to 11 RBs. However, channels corresponding to the maximum channel bandwidth are not limited. Therefore, it may be considered that the maximum channel bandwidth corresponds to all transmission channels. The transmission channels may include an uplink channel, a downlink channel, an uplink signal, and a downlink signal. The uplink channel or the uplink signal may include a synchronization signal, a PRACH, a PUCCH, a PUSCH, a sounding reference signal (sounding reference signal, SRS), a demodulation reference signal (demodulation reference signal, DMRS), or the like. The downlink channel or the downlink signal may include a physical broadcast channel (physical broadcast channel, PBCH), a physical downlink control channel (physical downlink control channel, PDCCH), a physical downlink shared channel (physical downlink shared channel, PDSCH), a DMRS, a random access response (random access response, RAR), paging (paging), and the like. In Table 1, values following the SCS in the first row are the maximum channel bandwidth.

In addition, an NR protocol further specifies frequency domain resource occupation of a PRACH. The frequency domain resource occupation of the PRACH may be shown in Table 2.

**Table 2 Frequency domain resource occupation of a PRACH**

| $L_{RA}$ | $\Delta f_{RA}$ of a PRACH | $\Delta f$ of a PUSCH | $N_{RB}^{RA}$ | $\overline{k}$ |
|---|---|---|---|---|
| 839 | 1.25 | 15 | 6 | 7 |
| 839 | 1.25 | 30 | 3 | 1 |
| 839 | 1.25 | 60 | 2 | 133 |
| 839 | 5 | 15 | 24 | 12 |
| 839 | 5 | 30 | 12 | 10 |
| 839 | 5 | 60 | 6 | 7 |
| 139 | 15 | 15 | 12 | 2 |
| 139 | 15 | 30 | 6 | 2 |
| 139 | 15 | 60 | 3 | 2 |
| 139 | 30 | 15 | 24 | 2 |
| 139 | 30 | 30 | 12 | 2 |
| 139 | 30 | 60 | 6 | 2 |

$L_{RA}$ in Table 2 is a length of a random access preamble sequence. $\Delta f_{RA}$ of the PRACH is the SCS of the PRACH. $\Delta f$ of the PUSCH is the SCS of the PUSCH. $N_{RB}^{RA}$ is a quantity of RBs needed as a resource for transmission of the PRACH. For example, $N_{RB}^{RA}$ may be based on the SCS of the PUSCH. k is an index of a start subcarrier in a start resource (RB) of the PRACH.

As shown in Table 2, different lengths of the random access preamble sequence and SCSs are applicable to different cell coverage. However, when $L_{RA}$ is equal to 839 and the SCS of the PRACH is equal to 5 kHz, or $L_{RA}$ is equal to 139 and the SCS of the PRACH is equal to 30 kHz, 12 RBs are needed as the resource for transmission of the PRACH, that is, transmission of the PRACH occupies 12 RBs, exceeding the 11 RBs defined in Table 1.

It can be learned that the quantity of frequency domain resources of the transmission resource needed by the PRACH is greater than the quantity of frequency domain resources of the maximum transmission bandwidth of the terminal device. In other words, the quantity of frequency domain resources of the transmission resource needed by the PRACH does not match the quantity of frequency domain resources of the maximum transmission bandwidth of the terminal device. Consequently, the terminal device cannot transmit the PRACH within the maximum transmission bandwidth of the terminal device. Therefore, it is important to determine a resource for transmission of the PRACH.

**Embodiment 1**

In view of the foregoing technical problem, this application provides a communication method. According to the method, a frequency domain resource of a maximum transmission bandwidth of a terminal device and a frequency domain resource needed for PRACH transmission are set in this application, so that the frequency domain resource needed for transmission of the PRACH can meet a requirement for transmission of the PRACH, ensuring communication between the terminal device and an access network device.

Embodiments provided in this application are described below in detail with reference to the accompanying drawings.

Based on the foregoing network architecture, FIG. 2 is a schematic flowchart of a communication method according to an embodiment of this application. As shown in FIG. 2, the communication method may include the following steps.

201: A terminal device determines a random access resource. For example, the random access resource is greater than a maximum transmission bandwidth of the terminal device.

For example, the random access resource being greater than the maximum transmission bandwidth of the terminal device may be understood as that a quantity of frequency domain resources of the random access resource may be greater than a quantity of frequency domain resources of the maximum transmission bandwidth of the terminal device.

When the terminal device accesses an access network device, the terminal device may determine the random access resource. The quantity of frequency domain resources of the random access resource may be greater than the quantity of frequency domain resources of the maximum transmission bandwidth of the terminal device.

The terminal device may be at least one of the following: a low-complexity terminal device, a low-complexity terminal device specified in R18, a terminal device whose maximum channel bandwidth is 5 MHz, or a terminal device whose maximum channel bandwidth is less than 5 MHz.

The frequency domain resource may be at a granularity of RB, subcarrier, subband, or Hz, or may be another frequency domain resource or frequency domain unit that can represent a size of the frequency domain resource. The quantity of frequency domain resources may be understood as a quantity of frequency domain resources, a quantity of RBs, a quantity of subcarriers, a quantity of subbands, Hz, or a quantity of frequency domain resources or frequency domain units that can represent a size of the frequency domain resource. This is not limited herein.

The quantity of frequency domain resources of the random access resource may be understood as a quantity of frequency domain resources that can be used for transmission of information and that are in the frequency domain resources included in the random access resource, for example, a quantity of RBs, a quantity of subcarriers, or a quantity of subbands included in the random access resource.

The maximum transmission bandwidth of the terminal device limits a maximum bandwidth of a signal received or sent by the terminal device. For example, it is assumed that a maximum transmission bandwidth of a frequency domain resource used by the terminal device to receive or send a signal is 5 MHz, a bandwidth of a signal sent or received by the terminal device should be less than or equal to 5 MHz. For another example, it is assumed that a maximum transmission bandwidth of a frequency domain resource used by the terminal device to receive or send a signal is 10 MHz, a bandwidth of a signal sent or received by the terminal device should be less than or equal to 10 MHz.

The quantity of frequency domain resources of the maximum transmission bandwidth of the terminal device may be understood as a quantity of frequency domain resources that can be used for transmission of information and that are in the frequency domain resources included in the maximum transmission bandwidth of the terminal device.

The following uses an example in which the frequency domain resource is at a granularity of RB for description.

In this case, a quantity of RBs of the random access resource is greater than a quantity of RBs of the maximum transmission bandwidth of the terminal device. For example, the quantity of RBs of the random access resource may be greater than 11, and the quantity of RBs of a BWP or another signal/channel of the terminal device may be 11. The another signal/channel may include one or more of a PUSCH, a PDSCH, a PUCCH, a PDCCH, an SRS, paging, a PBCH, a synchronization signal block (synchronization signal block, SSB), an RAR, a DMRS, and the like. It should be understood that a bandwidth of the BWP of the terminal device is less than or equal to the maximum transmission bandwidth of the terminal device. Correspondingly, the quantity of frequency domain resources of the BWP of the terminal device is less than or equal to the quantity of frequency domain resources of the maximum transmission bandwidth of the terminal device. For example, the quantity of RBs of the random access resource may be equal to 12. A bandwidth of the random access resource may be equal to 4.32 MHz. For example, when the subcarrier spacing of the PUSCH is 30 kHz, the quantity of RBs of the random access resource of the terminal device may be equal to 12. For another example, when the subcarrier spacing of the PUSCH is 30 kHz, and the subcarrier spacing of the PRACH is 5 kHz, the quantity of RBs of the random access resource of the terminal device may be equal to 12. For another example, when the subcarrier spacing of the PUSCH is 30 kHz, and the subcarrier spacing of the PRACH is 30 kHz, the quantity of RBs of the random access resource of the terminal device may be equal to 12. For another example, when the maximum channel bandwidth of the terminal device is less than or equal to 5 MHz, the quantity of RBs of the random access resource may be equal to 12. It should be understood that the foregoing examples are example descriptions of scenarios in which the quantity of RBs of the random access resource is equal to 12, and constitute no limitation. The quantity of RBs of the random access resource may also be greater than 12, for example, 13 or 14.

Currently, a concept of a BWP is introduced in NR. The BWP is relative to the bandwidth. The BWP is a part of contiguous frequency domain resources on a carrier, usually with an RB being a minimum frequency domain unit. One RB may include a plurality of subcarriers (subcarrier). For example, one RB may include 12 subcarriers. For another example, one RB may include 14 subcarriers. In this application, one RB includes 12 subcarriers. Based on uplink transmission and downlink transmission of data, BWPs may be classified into an uplink BWP and a downlink BWP. A BWP for transmitting uplink data is referred to as an uplink BWP, and a BWP for transmitting downlink data is referred to as a downlink BWP.

It should be understood that the foregoing description is an example in which the quantity of RBs of the random access resource is greater than the quantity of RBs of the maximum transmission bandwidth of the terminal device, and constitutes no limitation. For example, the quantity of RBs of the BWP of the terminal device and the quantity of RBs of the random access resource may be other values, provided that the quantity of RBs of the random access resource is greater than the quantity of RBs of the maximum transmission bandwidth of the terminal device, or the quantity of RBs of the random access resource is greater than the quantity of RBs of another signal/channel bandwidth.

During information transmission, to ensure correct information transmission and avoid mutual interference with a neighboring cell/an adjacent channel, a guard band may be added to two sides of a frequency domain resource (that is, a transmission bandwidth or a BWP) for transmission of the information, to protect the transmitted information. Therefore, the frequency domain resource of the random access resource has a corresponding guard band.

A minimum guard band for each channel bandwidth of the terminal device and each SCS of the PUSCH may be shown in Table 3.

**Table 3 Minimum guard band for each channel bandwidth of a terminal device and each SCS**

| SCS | 5 | 10 | 15 | 20 | 25 | 30 | 40 | 50 | 60 | 70 | 80 | 90 | 100 |
|-----|------|------|------|------|------|------|------|------|------|------|------|------|------|
| 15 | 242.5 | 312.5 | 382.5 | 452.5 | 522.5 | 592.5 | 552.5 | 692.5 | N/A | N/A | N/A | N/A | N/A |
| 30 | 505 | 665 | 645 | 805 | 785 | 945 | 905 | 1045 | 825 | 965 | 925 | 885 | 845 |
| 60 | N/A | 1010 | 990 | 1330 | 1310 | 1290 | 1610 | 1570 | 1530 | 1490 | 1450 | 1410 | 1370 |

It can be learned from Table 3 that when the maximum channel bandwidth of the terminal device is less than or equal to 5 MHz and the subcarrier spacing of the PUSCH is 30 kHz, the minimum guard band (guard band) for the channel bandwidth is 505 kHz. Because the quantity of frequency domain resources of the random access resource is greater than the quantity of frequency domain resources of the maximum channel bandwidth of the terminal device, the guard band corresponding to the random access resource may be less than 505 kHz. In Table 3, values following SCS in the first row are the maximum channel bandwidth.

For example, the guard band corresponding to the random access resource may be 325 (that is, 505-180) kHz, 145 (that is, 505-360) kHz, 340 (that is, (5000-12×360)/2) kHz, 415 (that is, (5000-139×30)/2) kHz, 430 kHz, 402.5 (that is, (5000-839×5)/2) kHz, or 417.5 kHz. It should be understood that the foregoing descriptions are examples of the size of the guard band corresponding to the random access resource, and constitute on limitation on the size of the guard band corresponding to the random access resource.

It should be noted that the guard band herein is a guard band on one side of the random access resource, and a total guard band corresponding to the random access resource is a sum of guard bands on two sides of the random access resource, that is, twice the guard band corresponding to the random access resource, that is, the guard band×2.

The foregoing is described by using an RB as a granularity of the frequency domain resource, but constitutes no limitation on the granularity of the frequency domain resource. For example, the frequency domain resource may be at a granularity of subcarrier.

The terminal device may determine the random access resource in three manners, which are separately described below.

Manner 1: The terminal device may determine the random access resource based on a first parameter and a first reference point. For example, the first reference point may be a carrier resource, a point A, a CRB 0, a BWP resource of the terminal device, or another frequency domain resource that can be used as a reference point.

For example, when the terminal device is a RedCap terminal device, the first reference point may be a carrier resource, a point A, or a CRB 0. When the terminal device is not a RedCap terminal device (that is, the terminal device is a legacy (legacy) terminal device), the first reference point may be a BWP resource of the terminal device.

The carrier is a carrier of the access network device. The access network device may indicate or configure the carrier of the access network device to the terminal device. For example, the access network device may broadcast carrier information of the access network device, and the terminal device may receive the carrier information broadcast by the access network device. The carrier resource may be a start resource of the carrier, an end resource of the carrier, a center frequency of the carrier, an end subcarrier in a start RB of the carrier, a start subcarrier in a start RB of the carrier, a start subcarrier in an end RB of the carrier, or another resource location of the carrier. This is not limited herein. For example, the start resource of the carrier may be a resource at a start location of the carrier, for example, a frequency at the start location of the carrier. For example, the end resource of the carrier may be a resource at an end location of the carrier, for example, a frequency at the end location of the carrier. For example, the center frequency of the carrier may be a frequency at a center point between the start resource of the carrier and the end resource of the carrier.

The point A is a common reference point of a resource grid (grid), and may be used as a reference point for determining a carrier position.

The CRB 0 is a start RB of a common resource block. The center of a subcarrier 0 of the CRB 0 is consistent with that of the point A.

The BWP resource of the terminal device may be a start resource of the BWP of the terminal device, an end resource of the BWP of the terminal device, a center frequency of the BWP of the terminal device, an end subcarrier in a start RB of the BWP of the terminal device, a start subcarrier in a start RB of the BWP of the terminal device, a start subcarrier in an end RB of the BWP of the terminal device, or another resource of the BWP of the terminal device. This is not limited herein. For example, the start resource of the BWP of the terminal device may be a resource at s start location of the BWP of the terminal device, for example, a frequency at the start location of the BWP of the terminal device. For example, the end resource of the BWP of the terminal device may be a resource at an end location of the BWP of the terminal device, for example, a frequency at the end location of the BWP of the terminal device. For example, the center frequency of the BWP of the terminal device may be a frequency at a center point between a start resource of the BWP of the terminal device and an end resource of the BWP of the terminal device.

In a case, the first parameter may indicate an offset value between the random access resource and the first reference point. The random access resource may be a start resource of the random access resource, an end resource of the random access resource, a center frequency of the random access resource, or another resource of the random access resource.

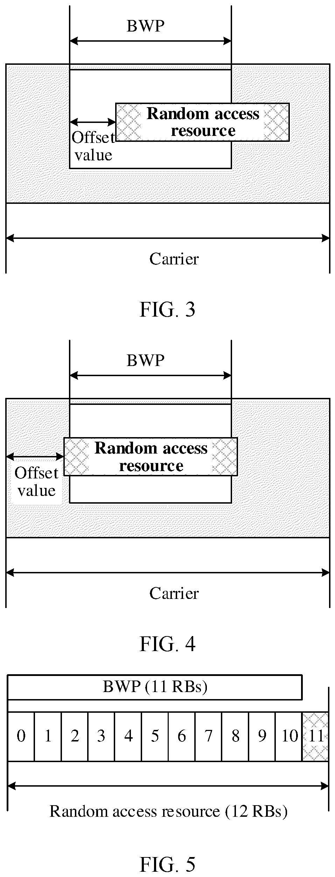

FIG. 3 is a diagram of a random access resource and a first reference point according to an embodiment of this application. As shown in FIG. 3, the first parameter indicates an offset value between a start resource of the random access resource and a first reference point, and the first reference point is a start resource of a BWP of a terminal device.

FIG. 4 is another diagram of a random access resource and a first reference point according to an embodiment of this application. As shown in FIG. 4, the first parameter indicates an offset value between a start resource of the random access resource and a first reference point, and the first reference point is a start resource of a carrier.

As shown in FIG. 3 and FIG. 4, the carrier may include the BWP of the terminal device and the random access resource.

For example, the start resource of the random access resource may be a resource at a start location of the random access resource, for example, a frequency at the start location of the random access resource. For example, the end resource of the random access resource may be a resource at an end location of the random access resource, for example, a frequency at the end location of the random access resource. For example, the center frequency of the random access resource may be a frequency at a center point between a start resource of the random access resource and an end resource of the random access resource.

The first parameter may be a positive number, may be a negative number, or may be 0. Further, the first parameter may be an integer, or may not be an integer. For example, the first parameter may be at a granularity of RB, subcarrier, subband, or another frequency domain unit.

An example in which the first reference point is a BWP resource of the terminal device is used below for description.

In an implementation, the start resource of the random access resource is the same as the start resource of the BWP of the terminal device, that is, the start resource of the random access resource is aligned with the start resource of the BWP of the terminal device, that is, the start resource of the random access resource is the start resource of the BWP of the terminal device. The end resource of the random access resource is after the end resource of the BWP of the terminal device. In other words, the end resource of the random access resource is a resource after the end resource of the BWP.

For example, when the frequency domain resource is at a granularity of RB, and the quantity of RBs of the random access resource is one more RB than the quantity of RBs of the BWP of the terminal device, the 1st RB of the random access resource may be mapped to the 1st RB of the BWP of the terminal device, and the last RB of the random access resource may be mapped to the 1st RB after the last RB of the BWP of the terminal device. The RB of the random access resource may be understood as an RB included in the random access resource. For example, it is assumed that the quantity of RBs of the random access resource is 12, and the quantity of RBs of the BWP of the terminal device is 11. FIG. 5 is a diagram of a random access resource and a BWP of a terminal device according to an embodiment of this application. As shown in FIG. 5, the 1st RB of the random access resource is mapped to the 1st RB of the BWP of the terminal device, and the 12th RB (namely, an RB 11) of the random access resource is mapped to the 1st RB after the 11th RB of the BWP of the terminal device.

For example, when the frequency domain resource is at a granularity of RB, and the quantity of RBs of the random access resource is K RBs more than the quantity of RBs of the BWP of the terminal device, the 1st RB of the random access resource may be mapped to the 1st RB of the BWP of the terminal device, and the last RB of the random access resource may be mapped to the Kth RB after the last RB of the BWP of the terminal device. K is an integer greater than 1.

The following describes a value of the first parameter when the meaning of the first reference point and the meaning of the first parameter vary.

For example, when the first reference point is the start resource of the BWP of the terminal device, and the first parameter indicates an offset value between the start resource of the random access resource and the first reference point, the first parameter is 0. For example, when the first reference point is the start resource of the BWP of the terminal device, and the first parameter indicates an offset value between the end resource of the random access resource and the first reference point, the first parameter is N. In an example, N is the quantity of RBs of the random access resource. N is an integer greater than 1. For example, when the first reference point is the start resource of the BWP of the terminal device, and the first parameter indicates an offset value between the center frequency of the random access resource and the first reference point, the first parameter is N/2. For example, when the first reference point is the end resource of the BWP of the terminal device, and the first parameter indicates an offset value between the start resource of the random access resource and the first reference point, the first parameter is -M. In an example, M is the quantity of RBs of the BWP of the terminal device. M is an integer greater than or equal to 1. In an example, M is less than N. For example, when the first reference point is the end resource of the BWP of the terminal device, and the first parameter indicates an offset value between the end resource of the random access resource and the first reference point, the first parameter is N-M. For example, when the first reference point is the end resource of the BWP of the terminal device, and the first parameter indicates an offset value between the center frequency of the random access resource and the first reference point, the first parameter is N/2-M. For example, when the first reference point is the center frequency of the BWP of the terminal device, and the first parameter indicates an offset value between the start resource of the random access resource and the first reference point, the first parameter is -M/2. For example, when the first reference point is the center frequency of the BWP of the terminal device, and the first parameter indicates an offset value between the end resource of the random access resource and the first reference point, the first parameter is N-M/2. For example, when the first reference point is the center frequency of the BWP of the terminal device, and the first parameter indicates an offset value between the center frequency of the random access resource and the first reference point, the first parameter is 0.

It should be understood that the foregoing descriptions are examples of the first parameter when the meaning of the first reference point and the meaning of the first parameter vary, and constitute no limitation. It can be learned that when meanings of the first parameter are the same, the first parameter varies if the first reference point varies. When the first reference points are the same, the first parameter varies if the meaning of the first parameter varies.

In another implementation, the start resource of the random access resource is before the start resource of the BWP of the terminal device, that is, the start resource of the random access resource is at a resource location before the start resource of the BWP of the terminal device. The end resource of the random access resource is the same as the end resource of the BWP of the terminal device. In other words, the end resource of the random access resource is aligned with the end resource of the BWP of the terminal device, that is, the end resource of the random access resource is the end resource of the BWP of the terminal device.

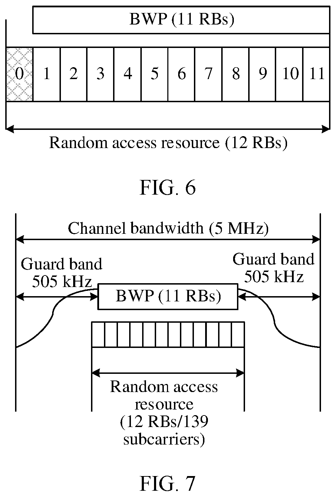

For example, when the frequency domain resource is at a granularity of RB, and the quantity of RBs of the random access resource is one more RB than the quantity of RBs of the BWP of the terminal device, the 1st RB of the random access resource is mapped to the RB before the 1st RB of the BWP of the terminal device, and the last RB of the random access resource is mapped to the last RB of the BWP of the terminal device. For example, it is assumed that the quantity of RBs of the random access resource is 12, and the quantity of RBs of the BWP of the terminal device is 11. FIG. 6 is another diagram of a random access resource and a BWP of a terminal device according to an embodiment of this application. As shown in FIG. 6, the 1st RB of the random access resource is mapped to the RB before the 1st RB of the BWP of the terminal device, and the 12th RB of the random access resource is mapped to the 11th RB of the BWP of the terminal device.

For example, when the frequency domain resource is at a granularity of RB, and the quantity of RBs of the random access resource is K RBs more than the quantity of RBs of the BWP of the terminal device, the 1st RB of the random access resource is mapped to the Kth RB before the 1st RB of the BWP of the terminal device, and the last RB of the random access resource is mapped to the last RB of the BWP of the terminal device.

The following describes the first parameter when the meaning of the first reference point and the meaning of the first parameter vary.

For example, when the first reference point is the start resource of the BWP of the terminal device, and the first parameter indicates an offset value between the start resource of the random access resource and the first reference point, the first parameter is M-N. For example, when the first reference point is the start resource of the BWP of the terminal device, and the first parameter indicates an offset value between the end resource of the random access resource and the first reference point, the first parameter is M. For example, when the first reference point is the start resource of the BWP of the terminal device, and the first parameter indicates an offset value between the center frequency of the random access resource and the first reference point, the first parameter is M-N/2. For example, when the first reference point is the end resource of the BWP of the terminal device, and the first parameter indicates an offset value between the start resource of the random access resource and the first reference point, the first parameter is -N. For example, when the first reference point is the end resource of the BWP of the terminal device, and the first parameter indicates an offset value between the end resource of the random access resource and the first reference point, the first parameter is 0. For example, when the first reference point is the end resource of the BWP of the terminal device, and the first parameter indicates an offset value between the center frequency of the random access resource and the first reference point, the first parameter is -N/2. For example, when the first reference point is the center frequency of the BWP of the terminal device, and the first parameter indicates an offset value between the start resource of the random access resource and the first reference point, the first parameter is M/2-N. For example, when the first reference point is the center frequency of the BWP of the terminal device, and the first parameter indicates an offset value between the end resource of the random access resource and the first reference point, the first parameter is -M/2. For example, when the first reference point is the center frequency of the BWP of the terminal device, and the first parameter indicates an offset value between the center frequency of the random access resource and the first reference point, the first parameter is (M-N)/2.

It should be understood that the foregoing descriptions are examples of the first parameter when the meaning of the first reference point and the meaning of the first parameter vary, and constitute no limitation. For example, the first reference point may be the 2nd RB of the BWP of the terminal device. It can be learned that when meanings of the first parameter are the same, the first parameter varies if the first reference point varies. When the first reference points are the same, the first parameter varies if the meaning of the first parameter varies.

In still another implementation, the center frequency of the random access resource is the same as the center frequency of the BWP of the terminal device. In other words, the center frequency of the random access resource is the center frequency of the BWP of the terminal device, that is, the center frequency of the random access resource is aligned with the center frequency of the BWP of the terminal device.

In this case, frequency domain resources corresponding to the quantity of frequency domain resources of the BWP of the terminal device are included in frequency domain resources corresponding to the quantity of frequency domain resources of the random access resource, a part that is in the frequency domain resources corresponding to the quantity of frequency domain resources of the random access resource and that does not overlap the frequency domain resources corresponding to the quantity of frequency domain resources of the BWP of the terminal device is outside the bandwidth corresponding to the quantity of frequency domain resources of the BWP of the terminal device, and lengths exceeding two sides of the bandwidth of the BWP of the terminal device are the same.

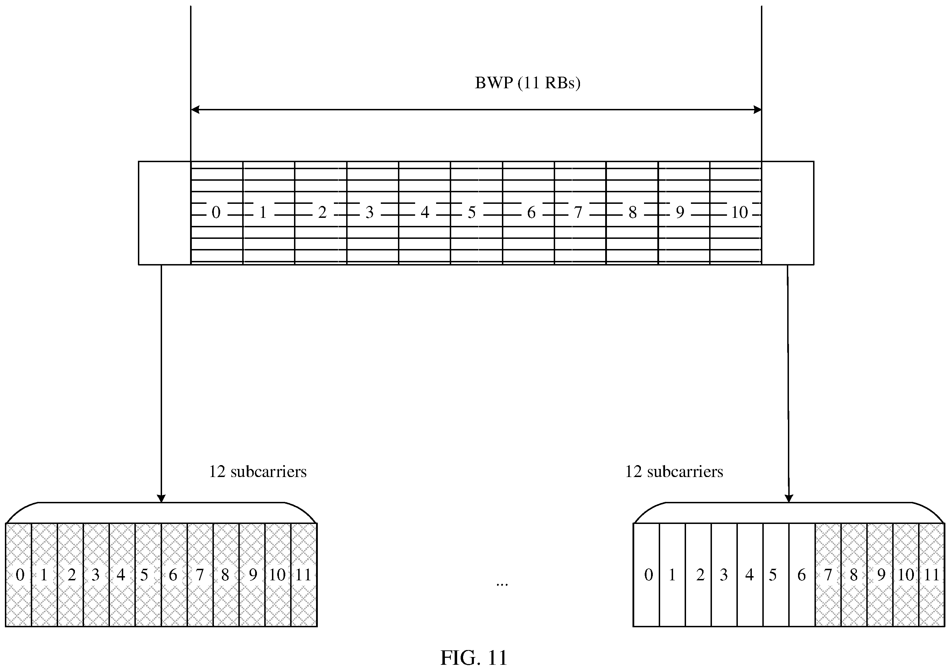

For example, it is assumed that the quantity of frequency domain resources of the random access resource is 12 RBs, and the quantity of frequency domain resources of the BWP of the terminal device is 11 RBs. FIG. 7 is still another diagram of a random access resource and a BWP of a terminal device according to an embodiment of this application. As shown in FIG. 7, 11 RBs of the BWP of the terminal device are included in 12 RBs of the random access resource, a non-overlapping part is outside the 11 RBs of the BWP of the terminal device, and bandwidths exceeding two sides of the BWP of the terminal device are 180 kHz, that is, 0.5 RB.

The following describes the first parameter when the meaning of the first reference point and the meaning of the first parameter vary.

For example, when the first reference point is the start resource of the BWP of the terminal device, and the first parameter indicates an offset value between the start resource of the random access resource and the first reference point, the first parameter is (M-N)/2. For example, when the first reference point is the start resource of the BWP of the terminal device, and the first parameter indicates an offset value between the end resource of the random access resource and the first reference point, the first parameter is (M+N)/2. For example, when the first reference point is the start resource of the BWP of the terminal device, and the first parameter indicates an offset value between the center frequency of the random access resource and the first reference point, the first parameter is M/2. For example, when the first reference point is the end resource of the BWP of the terminal device, and the first parameter indicates an offset value between the start resource of the random access resource and the first reference point, the first parameter is -(M+N)/2. For example, when the first reference point is the end resource of the BWP of the terminal device, and the first parameter indicates an offset value between the end resource of the random access resource and the first reference point, the first parameter is (N-M)/2. For example, when the first reference point is the end resource of the BWP of the terminal device, and the first parameter indicates an offset value between the center frequency of the random access resource and the first reference point, the first parameter is -M/2. For example, when the first reference point is the center frequency of the BWP of the terminal device, and the first parameter indicates an offset value between the start resource of the random access resource and the first reference point, the first parameter is -N/2. For example, when the first reference point is the center frequency of the BWP of the terminal device, and the first parameter indicates an offset value between the end resource of the random access resource and the first reference point, the first parameter is N/2. For example, when the first reference point is the center frequency of the BWP of the terminal device, and the first parameter indicates an offset value between the center frequency of the random access resource and the first reference point, the first parameter is 0.

It should be understood that the foregoing descriptions are examples of the first parameter when the meaning of the first reference point and the meaning of the first parameter vary, and constitute no limitation. For example, the first reference point may be the 2nd RB of the BWP of the terminal device. It can be learned that when meanings of the first parameter are the same, the first parameter varies if the first reference point varies. When the first reference points are the same, the first parameter varies if the meaning of the first parameter varies.

It should be understood that the foregoing descriptions are examples of the value of the first parameter, and constitute no limitation on the value of the first parameter. The value of the first parameter may alternatively be a specific value. For example, the value of the first parameter may also be -1, -0.5, 0, or the like.

It should be understood that the foregoing description is provided with the first parameter being at a granularity of RB, and the following description is provided by using an example in which the first parameter is at a granularity of subcarrier.

The first parameter may indicate an offset value between a start subcarrier of a random access preamble sequence in the resource corresponding to the quantity of frequency domain resources of the random access resource and the first reference point, that is, an offset value between the 1st subcarrier occupied by (or corresponding to) the random access preamble sequence in the random access resource and the first reference point, that is, an offset value between the start subcarrier of the random access preamble sequence in the random access resource and the first reference point, for example, indicate k in Table 3. The following provides description by using an example in which the first reference point is the start resource (for example, the start subcarrier) of the BWP of the terminal device.

As shown in Table 2, when the subcarrier spacing of the PUSCH is 30 kHz and the subcarrier spacing of the PRACH is 5 kHz, the length of the random access preamble sequence is 839, and the value of k is 10. When the subcarrier spacing of the PUSCH is 30 kHz and the subcarrier spacing of the PRACH is 30 kHz, the length of the random access preamble sequence is 139, and the value of k is 2. In this case, the quantity of frequency domain resources of the random access resource is greater than the quantity of frequency domain resources of the maximum transmission bandwidth of the terminal device.

The first parameter may indicate the value of k. The value of k indicated by the first parameter may be the same as that in Table 2. For example, the first parameter may indicate 2 or 10. The value of k indicated by the first parameter may also be different from that in Table 2. For example, the first parameter may indicate a value other than 2 and 10. For example, the value of the first parameter is not 2 or 10.

The following provides description by using an example in which the length of the random access preamble sequence is 139, the random access preamble sequence needs to occupy 139 subcarriers, the quantity of frequency domain resources of the random access resource is 139 subcarriers, and the quantity of frequency domain resources of the BWP of the terminal device is 11 RBs.

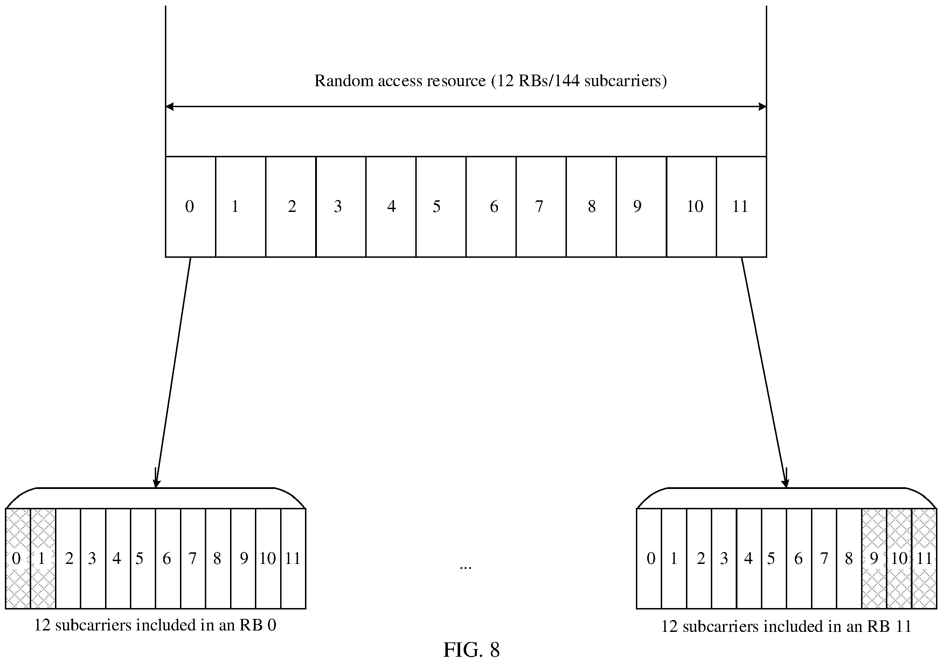

FIG. 8 is a diagram in which k is 2 according to an embodiment of this application. As shown in FIG. 8, a quantity of frequency domain resources of a random access resource is 12 RBs. Indexes or numbers of the 12 RBs start from 0 and end with 11. Each of the 12 RBs includes 12 subcarriers. Therefore, the 12 RBs include 144 subcarriers in total. Subcarriers in different RBs are separately numbered, and numbers or indexes of 12 subcarriers in each RB start from 0 and end with 11. The 1st subcarrier (that is, a subcarrier 0) and the 2nd subcarrier (that is, a subcarrier 1) in the 1st RB (that is, an RB 0) of the 12 RBs of the random access resource are not used for transmitting a random access preamble sequence. The 10th subcarrier (that is, a subcarrier 9), the 11th subcarrier (that is, a subcarrier 10), and the 12th subcarrier (that is, a subcarrier 11) in the 12th RB (that is, an RB 11) of the 12 RBs of the random access resource are not used for transmitting a random access preamble sequence. Transmission of the random access preamble sequence occupies the 3rd subcarrier (that is, a subcarrier 2) in the 1st RB (that is, the RB 0) of the random access resource to the 9th subcarrier (that is, a subcarrier 8) in the 12th RB (that is, the RB 11) of the random access resource, occupying 139 subcarriers in total. A start resource of the random access resource is the same as a start resource of a BWP of a terminal device. RBs are numbered starting from the 1st RB of the BWP of the terminal device.

For example, when a subcarrier spacing of a PUSCH is 30 kHz, and a subcarrier spacing of a PRACH is 30 kHz, candidate values of k may be an integer greater than or equal to -7, or may be an integer less than -7.

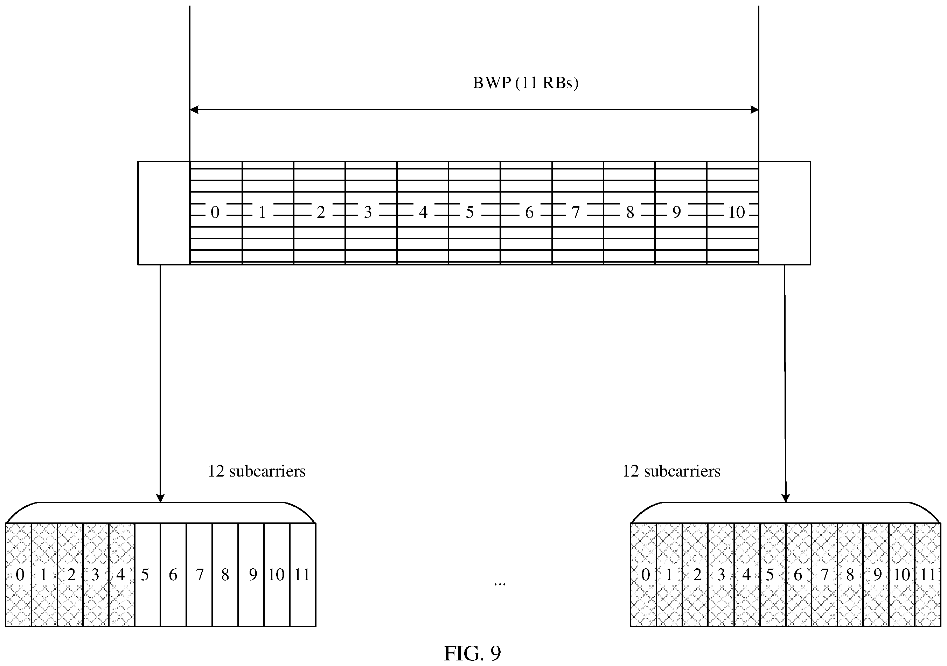

FIG. 9 is a diagram in which k is -7 according to an embodiment of this application. As shown in FIG. 9, the 1st subcarrier in subcarriers corresponding to a quantity of frequency domain resources of a random access resource is mapped to the 6th subcarrier (that is, a subcarrier 5) in the RB before the 1st RB in a BWP of a terminal device, and the last subcarrier in the subcarriers corresponding to the quantity of frequency domain resources of the random access resource is mapped to the 12th subcarrier in the 11th RB of the BWP of the terminal device. It can be learned that the subcarriers corresponding to the quantity of frequency domain resources of the random access resource occupy the entire BWP of the terminal device, and 7 subcarriers in the low frequency part outside the BWP of the terminal device, that is, a subcarrier 5 to a subcarrier 11 of the 1st RB outside the low frequency edge of the BWP of the terminal device, occupying 139 subcarriers in total.

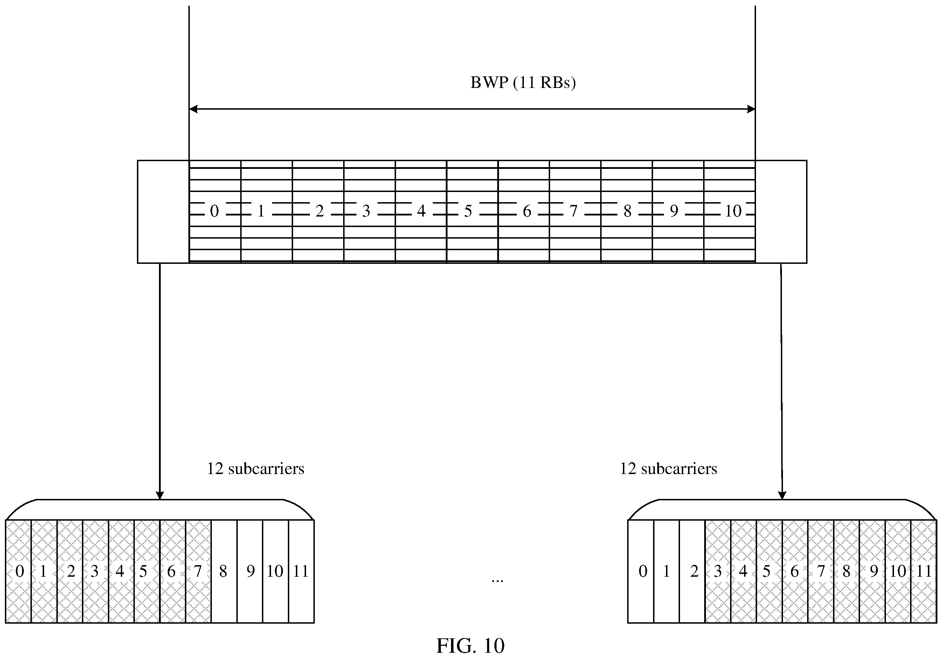

FIG. 10 is a diagram in which k is -4 according to an embodiment of this application. As shown in FIG. 10, the 1st subcarrier in subcarriers corresponding to a quantity of frequency domain resources of a random access resource is mapped to the 9th subcarrier (that is, a subcarrier 8) in the RB before the 1st RB in a BWP of a terminal device, and the last subcarrier in the subcarriers corresponding to the quantity of frequency domain resources of the random access resource is mapped to the 3rd subcarrier (that is, a subcarrier 2) in the RB after the 11th RB in the BWP of the terminal device. It can be learned that the subcarriers corresponding to the quantity of frequency domain resources of the random access resource occupy 4 subcarriers in the low frequency part outside the BWP of the terminal device, that is, a subcarrier 8 to a subcarrier 11 of the 1st RB outside the low frequency edge of the BWP of the terminal device, the entire BWP, and 3 subcarriers in the high frequency part outside the BWP of the terminal device, that is, a subcarrier 0 to a subcarrier 2 of the 1st RB outside the high frequency edge of the BWP of the terminal device.

FIG. 11 is a diagram in which k is 0 according to an embodiment of this application. As shown in FIG. 11, the 1st subcarrier in subcarriers corresponding to a quantity of frequency domain resources of a random access resource is mapped to the 1st subcarrier in the 1st RB in a BWP of a terminal device, and the last subcarrier in the subcarriers corresponding to the quantity of frequency domain resources of the random access resource is mapped to the 7th subcarrier (that is, a subcarrier 6) in the RB after the 11th RB in the BWP of the terminal device. It can be learned that the subcarriers corresponding to the quantity of frequency domain resources of the random access resource occupy the entire BWP of the terminal device and 7 subcarriers in the high frequency part outside the BWP of the terminal device, that is, a subcarrier 0 to a subcarrier 6 of the RB outside the high frequency edge of the BWP of the terminal device.

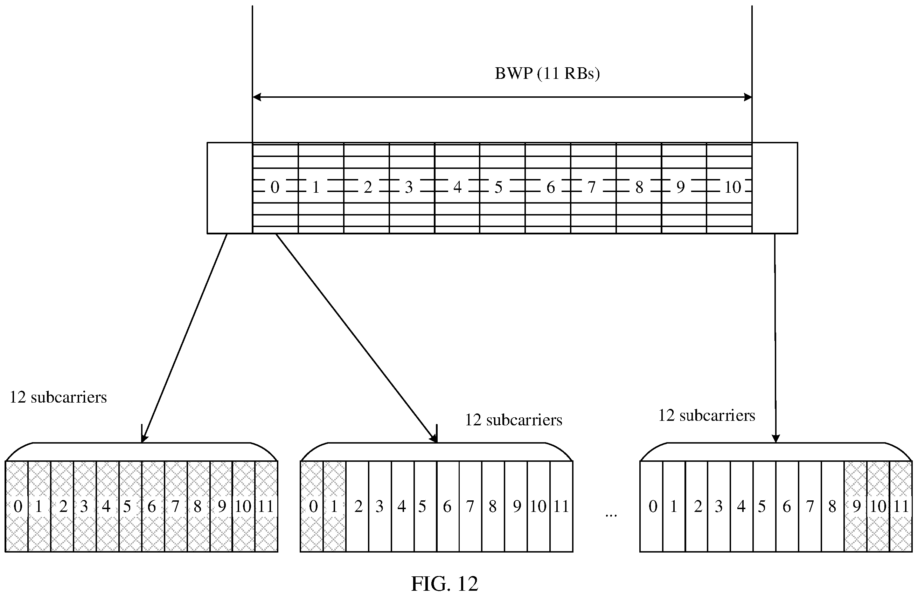

FIG. 12 is another diagram in which k is 2 according to an embodiment of this application. As shown in FIG. 12, the 1st subcarrier in subcarriers corresponding to a quantity of frequency domain resources of a random access resource is mapped to the 3rd subcarrier (that is, a subcarrier 2) in the 1st RB in a BWP of a terminal device, and the last subcarrier in the subcarriers corresponding to the quantity of frequency domain resources of the random access resource is mapped to the 9th subcarrier (that is, a subcarrier 8) in the RB after the 11th RB in the BWP of the terminal device. It can be learned that the subcarriers corresponding to the quantity of frequency domain resources of the random access resource occupy 130 subcarriers within the BWP of the terminal device and 9 subcarriers in the high frequency part outside the BWP of the terminal device, that is, a subcarrier 0 to a subcarrier 8 of the RB outside the high frequency edge of the BWP of the terminal device.

It should be understood that FIG. 8 to FIG. 12 are examples of the value of k, and constitute no limitation on the value of k. The value of k may be another integer. For example, the value of k may be 3, 4, 5, 6, or the like. For another example, the value of k may be any one of [-12, 5].

In another case, the first parameter may indicate a location relationship between the random access resource and the first reference point.

The first parameter may indicate a correspondence between the start resource of the random access resource and the first reference point. For example, the first parameter may indicate that the start resource of the random access resource is aligned with the first reference point, or the start resource of the random access resource is A frequency domain resources or frequency domain units before the first reference point, or the start resource of the random access resource is B frequency domain resources or frequency domain units after the first reference point. The first parameter may also indicate a correspondence between the end resource of the random access resource and the first reference point. For example, the first parameter may indicate that the end resource of the random access resource is aligned with the first reference point, or the end resource of the random access resource is A frequency domain resources or frequency domain units before the first reference point, or the end resource of the random access resource is B frequency domain resources or frequency domain units after the first reference point. The first parameter may alternatively indicate a location relationship between the center frequency of the random access resource and the first reference point. For example, the first parameter may indicate that the center frequency of the random access resource is aligned with the first reference point, or the center frequency of the random access resource is A frequency domain resources or frequency domain units before the first reference point, or the center frequency of the random access resource is B frequency domain resources or frequency domain units after the first reference point. A and B are integers greater than or equal to 1. The first parameter may alternatively indicate a location relationship between another resource of the random access resource and the first reference point.

In a manner, different location relationships between the random access resource and the first reference point correspond to different index values. The first parameter may indicate the location relationship between the random access resource and the first reference point. The location relationship between the random access resource and the first parameter point varies with different values of the first parameter.

When there are two location relationships between the random access resource and the first reference point, the first parameter may occupy 1 bit. For example, the value of the first parameter being 0 may indicate that the location relationship between the random access resource and the first reference point is that shown in FIG. 5, and the value of the first parameter being 1 may indicate that the location relationship between the random access resource and the first reference point is that shown in FIG. 6.

When there are three or four location relationships between the random access resource and the first reference point in total, the first parameter may occupy 2 bits. For example, the value of the first parameter being 00 may indicate that the location relationship between the random access resource and the first reference point is that shown in FIG. 5. The value of the first parameter being 01 may indicate that the location relationship between the random access resource and the first reference point is that shown in FIG. 6. The value of the first parameter being 10 may indicate that the location relationship between the random access resource and the first reference point is that shown in FIG. 7.

In another manner, the first parameter may indicate the location relationship between the random access resource and the first reference point by using a bitmap. A quantity of location relationships between the random access resource and the first reference point is the same as a quantity of bits of the first parameter, and each bit corresponds to one location relationship between the random access resource and the first reference point. When a specific location relationship between the random access resource and the first reference point needs to be indicated, a value of a bit corresponding to the location relationship in the bitmap may be 1 (or 0), and a value of a bit corresponding to another location relationship may be 0 (or 1).

The first reference point, the first parameter, and meanings of the first parameter may be protocol-specified, that is, configured by default, or configured by the access network device. For example, the configuration may be performed in a broadcast manner, or may be performed via one or more messages (or signaling). For example, the first parameter may be carried in a system message, for example, a system information block (system information block, SIB). The first parameter may alternatively be carried in downlink control information (downlink control information, DCI), may be carried in MAC, may be carried in a MAC control element (control element, CE), may be carried in RRC, or may be carried in other signaling or messages. This is not limited herein.

Manner 2: The terminal device may determine the random access resource according to a first rule.

The first rule may be protocol-specified, or configured by the access network device.

When the first rule is configured by the access network device, the access network device may further send first indication information to the terminal device in a broadcast manner. The first indication information indicates the first rule. Correspondingly, the terminal device may receive the first indication information broadcast by the access network device, and then may determine the first rule based on the first indication information, so as to determine the random access resource according to the first rule.

In an implementation, the first rule may be: when the BWP of the terminal device does not include A frequency domain resources with highest sequence numbers in the carrier, the start resource of the random access resource is the same as or aligned with the start resource of the BWP of the terminal device; or when the BWP of the terminal device includes A frequency domain resources with highest sequence numbers in the carrier, the end resource of the random access resource is the same as or aligned with the end resource of the BWP of the terminal device. Therefore, when the BWP of the terminal device does not include A frequency domain resources with highest sequence numbers in the carrier, the terminal device may determine that the start resource of the random access resource is the same as the start resource of the BWP of the terminal device, and the end resource of the random access resource is after the end resource of the BWP of the terminal device. When the BWP of the terminal device includes A frequency domain resources with highest sequence numbers in the carrier, the terminal device may determine that the start resource of the random access resource is before the start resource of the BWP of the terminal device, and the end resource of the random access resource is the same as the end resource of the BWP of the terminal device. A is a positive integer greater than 0. In this way, it can be ensured that the random access resource is within the range of the transmission bandwidth of the carrier, and transmission is not performed in a guard band of the carrier, avoiding interference with an adjacent frequency/a neighboring cell.

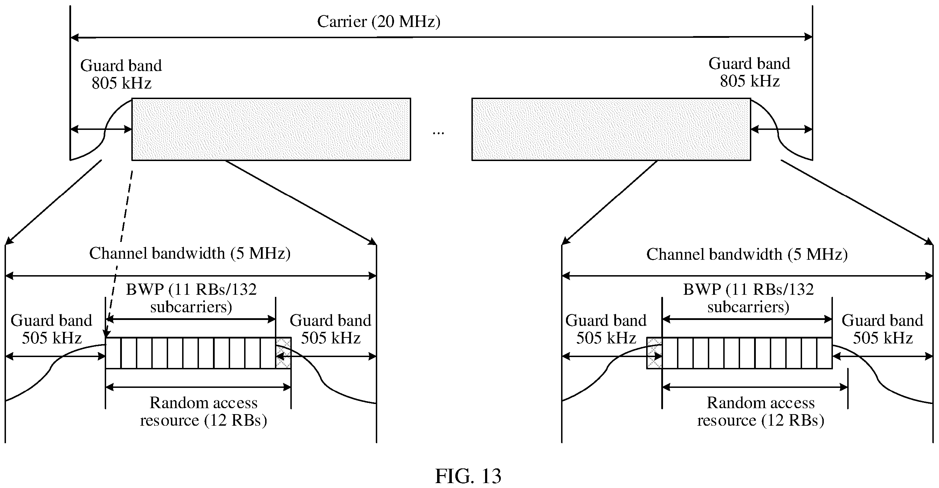

FIG. 13 is a diagram of determining a random access resource according to a first rule according to an embodiment of this application. As shown in FIG. 13, when the BWP of the terminal device does not include the RB with the highest sequence number in the carrier, it may be determined that the start resource of the random access resource is the same as the start resource of the BWP of the terminal device, and the end resource of the random access resource is after the end resource of the BWP of the terminal device. When the BWP of the terminal device includes the RB with the highest sequence number in the carrier, it may be determined that the start resource of the random access resource is before the start resource of the BWP of the terminal device, and the end resource of the random access resource is the same as the end resource of the BWP of the terminal device.

In another implementation, the first rule may be: when the BWP of the terminal device includes A frequency domain resources with lowest sequence numbers in the carrier, the start resource of the random access resource is the same as or aligned with the start resource of the BWP of the terminal device; or when the BWP of the terminal device does not include A frequency domain resources with lowest sequence numbers in the carrier, the end resource of the random access resource is the same as or aligned with the end resource of the BWP of the terminal device. Therefore, when the BWP of the terminal device does not include A frequency domain resources with lowest sequence numbers in the carrier, the terminal device may determine that the start resource of the random access resource is before the start resource of the BWP of the terminal device, and the end resource of the random access resource is after the end resource of the BWP of the terminal device. When the BWP of the terminal device includes A frequency domain resources with lowest sequence numbers in the carrier, the terminal device may determine that the start resource of the random access resource is the same as the start resource of the BWP of the terminal device, and the end resource of the random access resource is after the end resource of the BWP of the terminal device.

The carrier and the BWP of the terminal device may be sent by the access network device in a broadcast manner.

After receiving the carrier and the BWP of the terminal device that are broadcast by the access network device, the terminal device may determine the random access resource based on the first rule, the carrier, and the BWP of the terminal device.

Manner 3: The terminal device may determine the random access resource according to a second rule.

Because the quantity of frequency domain resources of the random access resource is greater than the quantity of frequency domain resources of the maximum transmission bandwidth of the terminal device, to enable that the frequency domain resource corresponding to the quantity of frequency domain resources of the random access resource is transmitted within the BWP of the terminal device, the frequency domain resource corresponding to the quantity of frequency domain resources of the random access resource may be split into two parts. How to perform splitting may be determined according to the second rule.

It can be learned that the quantity of frequency domain resources of the random access resource may include a quantity of frequency domain resources of a first resource and a quantity of frequency domain resources of a second resource. In other words, a sum of the quantity of frequency domain resources of the first resource and the quantity of frequency domain resources of the second resource is equal to the quantity of frequency domain resources of the random access resource. The second rule may specify the quantity of frequency domain resources of the first resource and the quantity of frequency domain resources of the second resource. Therefore, the terminal device may determine the quantity of frequency domain resources of the first resource and the quantity of frequency domain resources of the second resource according to the second rule.

A frequency domain resource corresponding to the quantity of frequency domain resources of the first resource is a frequency domain resource that is included in the first resource and that is used for transmitting information. A frequency domain resource corresponding to the quantity of frequency domain resources of the second resource is a frequency domain resource that is included in the second resource and that is used for transmitting information.

It is assumed that the quantity of frequency domain resources of the first resource is a, and the quantity of frequency domain resources of the second resource is b. The quantity of frequency domain resources of the random access resource is equal to a+b.

When the quantity of frequency domain resources of the random access resource is 12 RBs, the a frequency domain resources and the b frequency domain resources may occupy 12 RBs in total in the case of 30 kHz subcarrier spacing, or may occupy 139 subcarriers in total in the case of 30 kHz subcarrier spacing, or may occupy 839 subcarriers in total in the case of 5 kHz subcarrier spacing, or may occupy a bandwidth of $12 \times 360$ kHz=4.32 MHz in total, or may occupy a bandwidth of $139 \times 30$ kHz=4.17 MHz in total, or may occupy a bandwidth of $839 \times 5$ kHz=4.195 MHz in total, or may occupy 140 subcarriers in total in the case of 30 kHz subcarrier spacing, or may occupy 840 subcarriers in total in the case of 5 kHz subcarrier spacing, or may occupy a bandwidth of $140 \times 30$ kHz=4.2 MHz in total, or may occupy a bandwidth of $840 \times 5$ kHz=4.2 MHz in total.

When the quantity of frequency domain resources of the random access resource is 12 RBs, a may be 6, and b may be 6; a may be 11, and b may be 1; a may be 11, and b may be 1; or a and b may be other values. This is not limited herein. When the quantity of frequency domain resources of the random access resource is 24 RBs, a may be 18, and b may be 6; a may be 16, and b may be 8; a may be 17, and b may be 7; a may be 12, and b may be 12; or a and b may be other values. This is not limited herein.

The terminal device may determine a time domain resource of the first resource based on first information, and may determine a time domain resource of the second resource based on second information. The first information may be the same as or different from the second information.

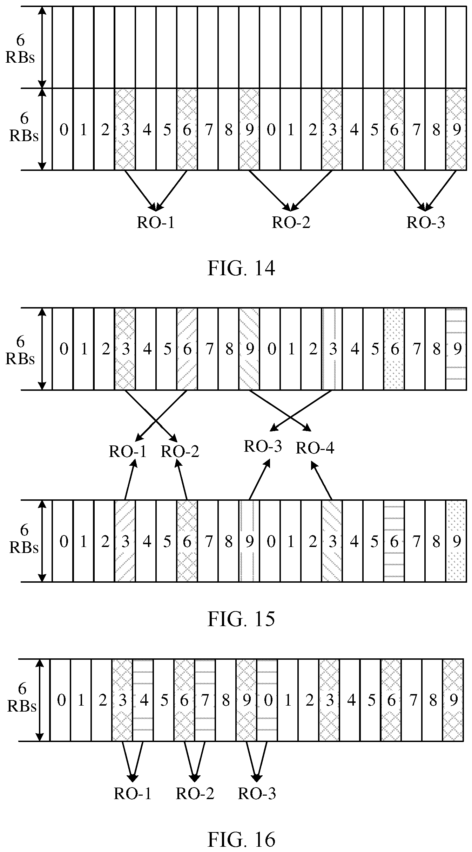

In an implementation, the terminal device may first determine two random access channel (random access channel, RACH) occasions (RACH occasion, RO), and then combine the two ROs into one RO. The RO obtained through combination includes the time domain resource of the first resource and the time domain resource of the second resource. The two ROs may be two ROs that are adjacent or not adjacent. In this case, the first information is the same as the second information, and is the RO obtained through combination. The determined time domain resource of the first resource is also the same as the determined time domain resource of the second information. FIG. 14 is a diagram of combining two ROs into one RO according to an embodiment of this application. As shown in FIG. 14, two adjacent ROs may be combined into one RO.

The terminal device may determine the time domain resource of the RO based on configuration information. For example, the terminal device may determine the time domain resource of the RO based on an existing protocol and configuration information.

In another implementation, the terminal device may determine the time domain resource of the first resource based on the $i^{th}$ RO, and may determine the time domain resource of the second resource based on the $(i+n)^{th}$ RO. Alternatively, the terminal device may determine the time domain resource of the second resource based on the $i^{th}$ RO, and may determine the time domain resource of the first resource based on the $(i+n)^{th}$ RO. n is an integer greater than 0. n may be protocol-specified, or configured by the access network device. In this case, the first information is different from the second information, and the determined time domain resource of the first resource is also different from the determined time domain resource of the second information.

It can be seen that cross mapping may be performed on two ROs, and the two ROs may be adjacent or not adjacent. FIG. 15 is a diagram of cross mapping of time domain resources according to an embodiment of this application. As shown in FIG. 15, cross mapping may be performed on two adjacent ROs.

Further, there is a difference of m time units between the time domain resource of the first resource and the time domain resource of the second resource. A value of m is related to time taken by the terminal device for frequency tuning. For example, when the time for frequency tuning is four symbols or 140 $\mu$s, the difference between the time domain resource of the first resource and the time domain resource of the second resource is four symbols. In this way, the terminal device has sufficient time to perform frequency tuning, and a guard period can be reserved for the terminal device between transmitting a first PRACH and a second PRACH, avoiding transmitting only a part of the PRACH due to limited channel bandwidth of the terminal device.

In still another implementation, a difference between the time domain resource of the first resource and the time domain resource of the second resource may be k time units, where k is an integer greater than or equal to 1.

The time unit may be at a granularity of slot (slot), mini-slot (mini-slot), symbol, millisecond (ms), K symbols, or may be another unit that can represent a time domain resource.

The terminal device may determine the time domain resource of the first resource based on one RO, and then may determine a resource corresponding to the $k^{th}$ time unit after the time domain resource of the first resource as the time domain resource of the second resource. Alternatively, the terminal device may determine the time domain resource of the second resource based on one RO, and then may determine a resource corresponding to the $k^{th}$ time unit after the time domain resource of the second resource as the time domain resource of the first resource.

FIG. 16 is a diagram of a time domain resource of a first resource and a time domain resource of a second resource according to an embodiment of this application. As shown in FIG. 16, a difference between the time domain resource of the second resource and the time domain resource of the first resource is one time unit, that is, the time domain resource of the second resource is at the $1^{st}$ time unit after (or before) the time domain resource of the first resource. A frequency domain resource of the first resource is the same as that of the second resource.

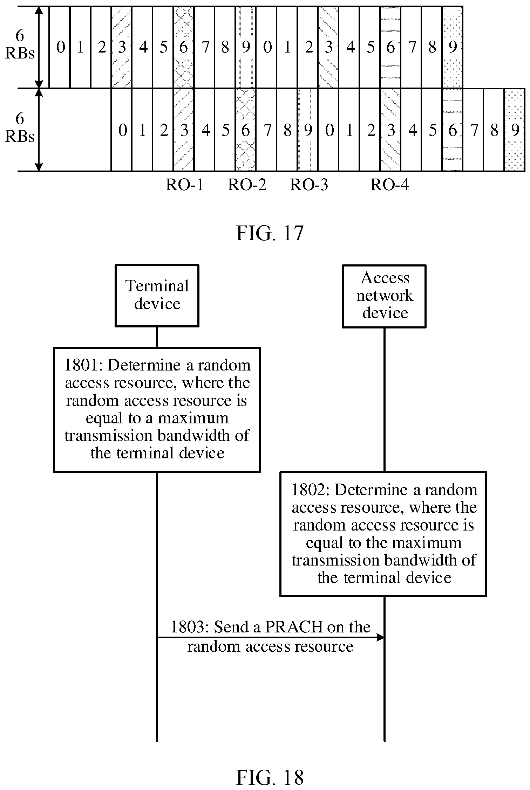

FIG. 17 is another diagram of a time domain resource of a first resource and a time domain resource of a second resource according to an embodiment of this application. As shown in FIG. 17, a difference between the time domain resource of the second resource and the time domain resource of the first resource is three time units, that is, the time domain resource of the second resource is at the $3^{rd}$ time unit after (or before) the time domain resource of the first resource. A frequency domain resource of the first resource is different from that of the second resource.

202: The access network device determines a random access resource.

A manner in which the access network device determines the random access resource is the same as a manner in which the terminal device determines the random access resource. For detailed descriptions, refer to step 201. Details are not described herein again.

203: The terminal device sends the PRACH to the access network device on the random access resource.

Correspondingly, the access network device receives the PRACH from the terminal device on the random access resource.

After determining the random access resource, the terminal device may send the PRACH to the access network device on the random access resource. The random access preamble sequence is carried on the PRACH.

When the quantity of frequency domain resources of the random access resource includes the quantity of frequency domain resources of the first resource and the quantity of frequency domain resources of the second resource, the terminal device may send the first PRACH on a frequency domain resource corresponding to the quantity of frequency domain resources of the first resource, and may send the second PRACH on a frequency domain resource corresponding to the quantity of frequency domain resources of the second resource. A first part of the random access preamble sequence is carried on the first PRACH, and a second part of the random access preamble sequence is carried on the second PRACH, the first part and the second part are a part or all of the random access preamble sequence. It can be learned that the random access preamble sequence may be split into at least two parts, and two of the at least two parts may be respectively carried on the PRACH transmitted on the first resource and the PRACH transmitted on the second resource.

In some cases, the RO basically occupies the entire BWP of the terminal device, and another channel cannot be transmitted. In other words, the RO occupies the maximum transmission bandwidth of the terminal device, and the terminal device is incapable of supporting transmission of a wider bandwidth. Therefore, the time unit corresponding to the random access resource is an invalid time unit of a first signal/channel. The first signal/channel may include at least one of a PUCCH, a PUSCH, an SRS, and the like. A time unit corresponding to the determined random access resource used for transmission of the PRACH is determined as an invalid time unit of the first signal/channel, ensuring that the first signal/channel is not transmitted on the resource for transmission of the PRACH, ensuring normal transmission of the PRACH and avoiding invalid transmission of the first signal/channel.

Only a time unit of an RO corresponding to a time domain resource used by the terminal device to transmit a random access channel may be determined as an invalid time unit of the first signal/channel, time units of all ROs may be determined as invalid time units of the first signal/channel, or a time unit of a valid RO may be determined as an invalid time unit of the first signal/channel. The time units of all the ROs are time units of all ROs configured by the access network device. The time domain resource used by the terminal device to transmit the random access channel corresponds to an RO, and is the RO used by the terminal device to transmit the random access channel. If the terminal device does not transmit a random access channel on an RO, a time unit corresponding to the RO cannot be used as an invalid time unit of the first signal/channel, but is used as a valid time unit of the first signal/channel.

In an implementation, random access corresponding to the PRACH is contention-free random access. In other words, a time unit of an RO configured as contention-free (contention free, CF) may be determined as an invalid time unit of the first signal/channel. In this case, random access is triggered by the access network device. Therefore, it may be considered that the PRACH has a highest priority. Contention-free random access is random access initiated by the terminal device and triggered by the access network device, and the access network device configures a specific resource for the terminal device. Therefore, if the terminal device does not transmit the PRACH on the resource, the resource is wasted, causing a waste of transmission resources. In addition, the access network device indicates the terminal device to initiate random access because random access is needed to ensure signal transmission quality in the case of uplink out-of-synchronization. Therefore, contention-free random access should be of a higher priority, so that a PRACH corresponding to the contention-free random access can be transmitted with priority.

In another implementation, a priority of the first signal/channel is lower than a priority of the PRACH. When the priority of the PRACH is higher than the priority of the first signal/channel, the time unit of the RO corresponding to the time domain resource of the random access resource may be determined as an invalid time unit of the first signal/channel.

The priority of the PRACH may be higher than a priority of an SRS, a PUSCH, a PUCCH, or the like. In this case, a time unit of an RO configured as contention-based (contention based, CB) may be determined as an invalid time unit of the first signal/channel, that is, the time unit of the RO corresponding to the time domain resource of the random access resource is determined as an invalid time unit of the first signal/channel.

Priorities of different signals/channels may be: SRS > PRACH > PUSCH/PUCCH. In this case, a time unit of an RO configured as CB (that is, the time unit of the RO corresponding to the time domain resource of the random access resource) may be determined as an invalid time unit of the PUSCH and the PUCCH, and a time unit of an RO configured as CB may be determined as a valid time unit of the SRS.

For example, priorities of different signals/channels may be: dynamic scheduling (dynamic scheduling, DG) PUSCH > PRACH> configured grant (configured grant, CG) PUSCH. When the PUSCH is a DG PUSCH, the priority of the PUSCH is higher than that of the PRACH. Therefore, the time unit of the RO corresponding to the time domain resource of the random access resource may be determined as a valid time unit of the PUSCH. When the PUSCH is a CG PUSCH, the priority of the PUSCH is lower than that of the PRACH. Therefore, the time unit of the RO corresponding to the time domain resource of the random access resource may be determined as an invalid time unit of the PUSCH.

The PRACH procedure is triggered to improve signal transmission quality. Therefore, the priority of the PRACH should be higher than that of transmission of another signal/channel, to avoid a waste of system resources caused by a transmission failure of another signal/channel due to poor signal transmission quality. In addition, when the priority of the PRACH is higher than the priority of the first signal/channel, and the PRACH and the first signal/channel contend for a same time unit, the contention of the PRACH definitely succeeds because the priority of the PRACH is higher, and the contention of the first signal/channel definitely fails because the priority of the first signal/channel is lower, the determined time unit corresponding to the random access resource used for transmission of the PRACH is determined as an invalid time unit of the first signal/channel, so that invalid contention of the first signal/channel can be avoided, improving transmission efficiency of the first signal/channel, and reducing a transmission delay of the first signal/channel.

In still another implementation, random access corresponding to the PRACH is triggered by a specific event. When the random access corresponding to the PRACH is triggered by an event related to out-of-synchronization, the time unit of the RO corresponding to the time domain resource of the random access resource may be determined as an invalid time unit of the first channel/signal. For example, when the random access corresponding to the PRACH is random access triggered by uplink out-of-synchronization, the time unit of the RO corresponding to the time domain resource of the random access resource may be determined as an invalid time unit of the first channel/signal. For another example, when the random access corresponding to the PRACH is random access triggered by downlink out-of-synchronization, the time unit of the RO corresponding to the time domain resource of the random access resource may be determined as an invalid time unit of the first channel/signal.

When the random access corresponding to the PRACH is triggered by a synchronization-related event, the time unit of the RO corresponding to the time domain resource of the random access resource may be determined as a valid time unit of the first channel/signal. For example, when the random access corresponding to the PRACH is triggered by a system information request, the time unit of the RO corresponding to the time domain resource of the random access resource may be determined as a valid time unit of the first channel/signal. For another example, when the random access corresponding to the PRACH is triggered by a scheduling request (scheduling request, SR) or a system information request, the time unit of the RO corresponding to the time domain resource of the random access resource may be determined as a valid time unit of the first channel/signal.

A priority of random access triggered by a specific event is higher than that of the first signal/channel, and a priority of random access triggered by a non-specific event is lower than that of the first signal/channel. For example, a priority of random access triggered by a link failure, time out-of-synchronization, or the like is relatively high, and a priority of random access triggered by a scheduling request, a system message request, or the like is relatively low. When the random access corresponding to the PRACH is triggered by a specific event, it indicates that the priority of the PRACH is higher than the priority of the first signal/channel. When the PRACH and the first signal/channel contend for a same time unit, the contention of the PRACH definitely succeeds because the priority of the PRACH is higher, and the contention of the first signal/channel definitely fails because the priority of the first signal/channel is lower, the determined time unit corresponding to the random access resource used for transmission of the PRACH is determined as an invalid time unit of the first signal/channel, so that invalid contention of the first signal/channel can be avoided, improving transmission efficiency of the first signal/channel, and reducing a transmission delay of the first signal/channel.

When the quantity of frequency domain resources of the random access resource is greater than the quantity of frequency domain resources of the maximum transmission bandwidth of the terminal device, the PRACH cannot be transmitted in the BWP of the terminal device. Therefore, the terminal device may determine that a corresponding configuration is an invalid configuration or an incorrect configuration.

For example, when the channel bandwidth of the terminal device is less than or equal to 5 MHz and the subcarrier spacing of the PUSCH is 30 kHz, the terminal device does not expect the configured quantity of frequency domain resources included in the resource used by the PRACH to exceed 11. For another example, when the channel bandwidth of the terminal device is less than or equal to 3.5 MHz and the subcarrier spacing of the PUSCH is 15 kHz, the terminal device does not expect the configured quantity of frequency domain resources included in the resource used by the PRACH to be 24, or a value greater than 17, a value greater than 18, or a value greater than 16.

For example, in a scenario in which the subcarrier spacing of the PUSCH is 30 kHz, and the subcarrier spacing of the PRACH is 5 kHz or 30 kHz, the quantity of frequency domain resources of the maximum bandwidth of the terminal device is 11 RBs, and the quantity of frequency domain resources of the random access resource is 12 RBs, the access network device does not support a configuration in which the PRACH occupies 12 RBs. Therefore, the terminal device may determine that the corresponding configuration is an invalid configuration or an incorrect configuration.

When the quantity of frequency domain resources of the random access resource is greater than the quantity of frequency domain resources of the maximum bandwidth of the terminal device, a random sequence carried on the PRACH is a part of the random access preamble sequence.

When the channel bandwidth of the terminal device is less than or equal to 5 MHz, and the subcarrier spacing of the PUSCH is 30 kHz, the length of the random access preamble sequence carried on the PRACH is less than L1. When the subcarrier spacing of the PRACH is 5 kHz, L1 is 839. When the subcarrier spacing of the PRACH is 30 kHz, L1 is 139. For example, when the subcarrier spacing of the PRACH is 5 kHz, the length of the random access preamble sequence may be 792, may be a positive integer less than or equal to 792, or may be a positive integer greater than or equal to 720 and less than 839. For another example, when the subcarrier spacing of the PRACH is 30 kHz, the length of the random access preamble sequence may be a positive integer less than 139, may be a positive integer less than or equal to 132, or may be a positive integer greater than or equal to 120 and less than 139.

## Embodiment 2

In view of the foregoing technical problem, this application provides a communication method. According to the method, a frequency domain resource of a maximum transmission bandwidth of a terminal device and a frequency domain resource needed for PRACH transmission are set in this application, so that the frequency domain resource needed for transmission of the PRACH can meet a requirement for transmission of the PRACH, ensuring communication between the terminal device and an access network device. For example, 11 in Table 1 may be changed to 12.

Based on the foregoing network architecture, FIG. 18 is a schematic flowchart of another communication method according to an embodiment of this application. As shown in FIG. 18, the communication method may include the following steps.

1801: A terminal device determines a random access resource. For example, the random access resource is equal to a maximum transmission bandwidth of the terminal device.

For example, the random access resource being equal to the maximum transmission bandwidth of the terminal device may be understood as that a quantity of frequency domain resources of the random access resource may be equal to a quantity of frequency domain resources of the maximum transmission bandwidth of the terminal device.

When the terminal device accesses an access network device, the terminal device may determine the random access resource. The terminal device may determine the quantity of frequency domain resources of the random access resource based on the quantity of frequency domain resources of the maximum transmission bandwidth of the terminal device, that is, may determine the quantity of frequency domain resources of the maximum transmission bandwidth of the terminal device as the quantity of frequency domain resources of the random access resource.

For example, when a subcarrier spacing of a PUSCH is 30 kHz, a maximum quantity of RBs included in a BWP is 12. For example, when the subcarrier spacing of the PUSCH is 30 kHz, a maximum quantity of RBs that may be included in a BWP configured by the access network device for the terminal device is 12. For another example, when the subcarrier spacing of the PUSCH is 30 kHz, the maximum transmission bandwidth of the terminal device is 12 RBs. In this case, the maximum channel bandwidth of the terminal device is less than or equal to 5 MHz. This is beneficial to channel design of a small-bandwidth terminal device. For example, when the subcarrier spacing of the frequency domain resource of the random access resource is 30 kHz, 12 RBs need to be occupied. For another example, PDCCH frequency domain resources are allocated at a granularity of control channel element (control channel element, CCE), and one CCE resource is equivalent to six RBs, that is, the granularity of PDCCH resource allocation is equivalent to six RBs. Therefore, the BWP may include 12 RBs, and two complete CCEs may be configured. This helps simplify resource management and allocation of the access network device.

The quantity of frequency domain resources of the random access resource may be the same as a quantity of frequency domain resources of the BWP of the terminal device. The terminal device may determine the quantity of frequency domain resources of the random access resource based on the quantity of frequency domain resources of the BWP of the terminal device. In this case, the quantity of frequency domain resources of the BWP of the terminal device is the quantity of frequency domain resources of the maximum transmission bandwidth of the terminal device.

The random access resource is the same as a BWP resource of the terminal device. In other words, the quantity of frequency domain resources of the random access resource is the same as the quantity of frequency domain resources of the BWP of the terminal device, and a location of the frequency domain resource of the random access resource is the same as a location of the frequency domain resource of the BWP of the terminal device. For example, when the subcarrier spacing of the PUSCH is 30 kHz, a quantity of RBs of the random access resource of the terminal device and a quantity of RBs of the BWP may be equal to 12. For another example, when the subcarrier spacing of the PUSCH is 30 kHz, and the subcarrier spacing of the PRACH is 5 kHz, the quantity of RBs of the random access resource and the quantity of the RBs of the BWP of the terminal device may be equal to 12. For another example, when the subcarrier spacing of the PUSCH is 30 kHz, and the subcarrier spacing of the PRACH is 30 kHz, the quantity of RBs of the random access resource and the quantity of the RBs of the BWP of the terminal device may be equal to 12. For another example, when the maximum channel bandwidth of the terminal device is less than or equal to 5 MHz, the quantity of RBs of the random access resource of the terminal device and the quantity of RBs of the BWP may be equal to 12. The access network device may configure a BWP of the terminal device for the terminal device. A quantity of frequency domain resources of the BWP configured for the terminal device is greater than the quantity of RBs in Table 1, so that the quantity of frequency domain resources of the random access resource is the same as or equal to the quantity of frequency domain resources of the BWP of the terminal device.

For example, a maximum transmission bandwidth of a first terminal device is 12 RBs, and a maximum transmission bandwidth of a second terminal device is 11 RBs. A channel bandwidth of the first terminal device is 5 MHz, and a channel bandwidth of the second terminal device is 5 MHz. The first terminal device may be a low-complexity terminal device, a low-complexity terminal device specified in R18, an evolved low-complexity terminal device, or a further reduced low-complexity terminal device. The second terminal device may be a non-low-complexity terminal device, a low-complexity terminal device specified in R17, an eMBB terminal device, or a URLLC terminal device.

The access network device may configure the BWP of the terminal device for the terminal device in a broadcast manner.

In one case, the access network device may configure a BWP of one type of terminal devices, and a quantity of frequency domain resources of the BWP of the terminal device is the same as the quantity of frequency domain resources of the random access resource.

In another case, the access network device may configure BWPs of two types of terminal devices. A quantity of frequency domain resources of the BWP of one type of terminal devices is the same as the quantity of frequency domain resources of the random access resource, and a quantity of frequency domain resources of the BWP of the other type of terminal devices is greater than the quantity of frequency domain resources of the random access resource. The terminal device may determine, based on information such as a protocol and a channel bandwidth that are used by the terminal device, a BWP to be used.

For example, when the protocol used by the terminal device is an existing protocol (for example, R15, R16, or R17), the terminal device may use a BWP of the terminal device whose quantity of frequency domain resources is greater than the quantity of frequency domain resources of the random access resource. When the protocol used by the terminal device is a future or later protocol (for example, R18), the terminal device may use a BWP of the terminal device whose quantity of frequency domain resources is equal to the quantity of frequency domain resources of the random access resource.

1802: The access network device determines a random access resource.

A manner in which the access network device determines the random access resource is the same as a manner in which the terminal device determines the random access resource. For detailed descriptions, refer to step 1801. Details are not described herein again.

1803: The terminal device sends the PRACH to the access network device on the random access resource.

Correspondingly, the access network device receives the PRACH from the terminal device on the random access resource.

After determining the random access resource, the terminal device may send the PRACH to the access network device on the random access resource. A random access preamble sequence is carried on the PRACH. The PRACH may be transmitted in the BWP of the terminal device, may not be transmitted in the BWP of the terminal device, or may be partially transmitted in the BWP of the terminal device and partially not transmitted in the BWP of the terminal device. This is not limited herein.

**Embodiment 3**

When a terminal device needs to perform random access, the terminal device may randomly select a random access preamble sequence from a plurality of random access preamble sequences broadcast by an access network device, and then may send the selected random access preamble sequence to the access network device on a preconfigured RO resource. After successfully receiving the random access preamble sequence from the terminal device, the access network device may send feedback information, that is, an RAR, to the terminal device in a preconfigured RAR window (window) when the terminal device is allowed to access the access network device. The RAR may include an RAR message. Each random access preamble sequence corresponds to an identity (identity, ID), and the RAR message may include IDs corresponding to a plurality of terminal devices. When the RAR message includes the ID of the random access preamble sequence sent by the terminal device, the terminal device may report the ID of the terminal device to the access network device. After successfully receiving the ID of the terminal device from the terminal device, the access network device may indicate the ID of the terminal device that successfully performs access. A message used to indicate the ID of the terminal device that successfully performs access may be a message 4 (message 4, Msg4). After successfully receiving the Msg4, the terminal device may send feedback information, that is, feedback information for the Msg4, to the access network device.

Currently, the access network device may first configure 16 PUCCH resources used for transmission of the feedback information for the Msg4, and then may indicate, by using signaling, an index $r_{PUCCH}$ of a PUCCH resource to be used by the terminal device in the 16 PUCCH resources. When the terminal device performs transmission of the feedback information for the Msg4 using the PUCCH resource, PUCCH transmission is performed through frequency hopping, and two-hops of frequency domain resources may occupy one RB. When $\lfloor r_{PUCCH}/8 \rfloor = 0$, an index of an RB for the 1st hop may be based on Formula (1), which is expressed as follows:

$$\mathrm{RB}_{\mathrm{BWP}}^{\mathrm{offset}} + \lfloor \mathrm{r}_{\mathrm{PUCCH}}/\mathrm{N}_{\mathrm{CS}} \rfloor \quad (1)$$

$RB_{BWP}^{offset}$ represents an offset of a PRB in the case of calculation of a transmission resource of a PUCCH, that is, a second offset described below. $N_{CS}$ represents a total quantity of initial cyclic indexes included in an initial cyclic shift index set, that is, a quantity of cyclic indexes included in one RB. $\lfloor \cdot \rfloor$ indicates rounding down. $RB_{BWP}^{offset}$ may be understood as an offset of the 1st resource in the PUCCH resources configured for the terminal device relative to a start resource of a BWP of the terminal device. The PUCCH resource may be understood as a resource for transmission of the PUCCH, or may be understood as a transmission resource of the PUCCH. An index of an RB for the 2nd hop may be based on Formula (2), which is expressed as follows:

$$\mathrm{N}_{\mathrm{BWP}}^{\mathrm{size}} - 1 - \mathrm{RB}_{\mathrm{BWP}}^{\mathrm{offset}} - \lfloor \mathrm{r}_{\mathrm{PUCCH}}/\mathrm{N}_{\mathrm{CS}} \rfloor \quad (2)$$

$N_{BWP}^{size}$ represents a quantity of frequency domain resources or a quantity of RBs included in the BWP of the terminal device.

When $\lfloor r_{PUCCH}/8 \rfloor = 1$, an index of an RB for the 1st hop may be based on Formula (3), which is expressed as follows:

$$N_{\text{BWP}}^{\text{size}} - 1 - RB_{\text{BWP}}^{\text{offset}} - \lfloor (r_{\text{PUCCH}} - 8)/N_{\text{CS}} \rfloor \quad (3)$$

An index of an RB for the 2nd hop may be based on Formula (4), which is expressed as follows:

$$RB_{\text{BWP}}^{\text{offset}} + \lfloor (r_{\text{PUCCH}} - 8)/N_{\text{CS}} \rfloor \quad (4)$$

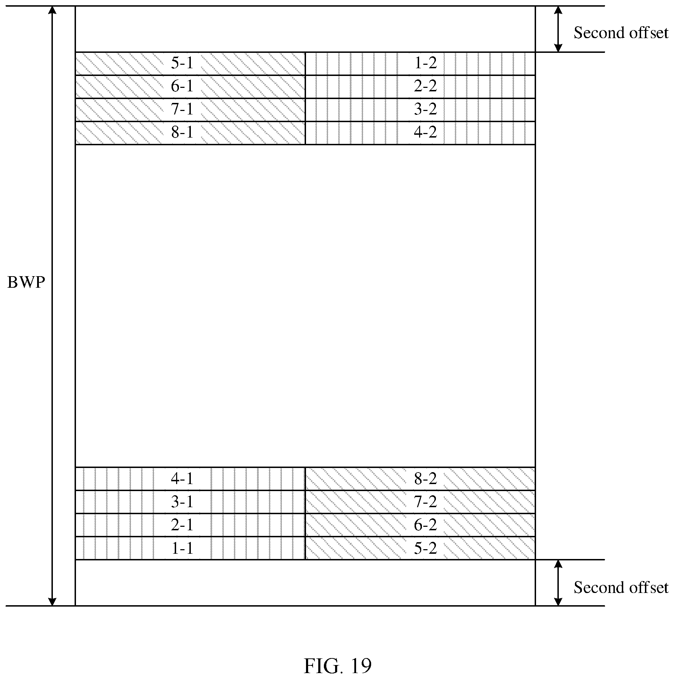

For example, FIG. 19 is a diagram of performing PUCCH transmission through frequency hopping according to an embodiment of this application. As shown in FIG. 19, 16 PUCCH resources may occupy eight RBs, and each RB may include two cyclic indexes. A frequency domain resource of the 1st hop is identified by "x-1", and a resource of the 2nd hop is identified by "x-2". A second offset in FIG. 19 is the foregoing $RB_{BWP}^{offset}$.

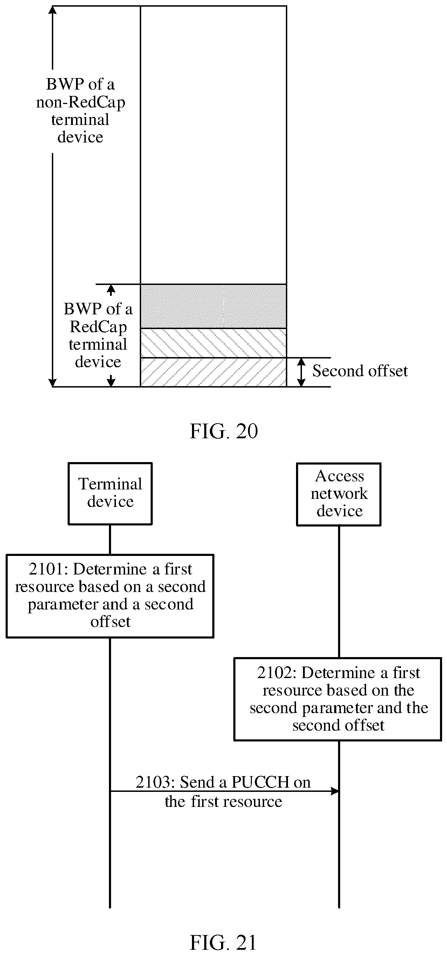

In an existing protocol, $RB_{BWP}^{offset}$ may be 0, 2, 3, or 4. Frequency domain resources of the 16 PUCCH resources are located on two sides of a BWP of a terminal device, and a quantity of RBs occupied on one side of the BWP of the terminal device may be 2, 3, or 4. For a RedCap terminal device, to avoid resource fragmentation, an access network device may allocate the frequency domain resources of the 16 PUCCH resources to one side of the BWP. FIG. 20 is a diagram in which frequency domain resources of a PUCCH resource are on one side of a BWP of a terminal device according to an embodiment of this application. As shown in FIG. 20, when a start resource of a BWP of a RedCap terminal device overlaps a start resource of a BWP of a non-RedCap terminal device, to avoid a resource conflict caused by overlapping between the RedCap terminal device and the non-RedCap terminal device, a PUCCH resource of the RedCap terminal device and a PUCCH resource of the non-RedCap terminal device may be configured to be orthogonal, that is, configured on different or non-overlapping resources.

Because $RB_{BWP}^{offset}$ has only four values: 0, 2, 3, or 4, PUCCH resources being staggered for the two types of terminal devices cannot be ensured. It can be learned that it is very important to ensure that PUCCH resources for the two types of terminal devices are staggered.

In this embodiment, the frequency domain resources of the 16 PUCCH resources are located on one side of the BWP of the terminal device, and a parameter, namely, a second parameter, is newly introduced when the PUCCH resource is determined. This parameter can be used to ensure that a resource used by a RedCap terminal device for transmission of feedback information for a Msg4 is staggered from a resource used by a non-RedCap terminal device for transmission of feedback information for a Msg4, avoiding a resource conflict.

FIG. 21 is a schematic flowchart of still another communication method according to an embodiment of this application. As shown in FIG. 21, the communication method may include the following steps.

2101: A terminal device determines a first resource based on a second parameter and a second offset.

After receiving a Msg4 from an access network device, the terminal device may determine the first resource based on the second parameter and the second offset.

Candidate values of the second parameter may be one or more of the following: 0, 2, 3, 4, 6, -2, -3, -4, -6,

$$N_{\text{BWP}}^{\text{size}} - 1 - 2RB_{\text{BWP}}^{\text{offset}} - 2\lfloor r_{\text{PUCCH}}/N_{\text{CS}} \rfloor, \quad N_{\text{BWP}}^{\text{size}} - 3 - 2RB_{\text{BWP}}^{\text{offset}} -$$

$$2\lfloor r_{\text{PUCCH}}/N_{\text{CS}} \rfloor, \quad N_{\text{BWP}}^{\text{size}} - 4 - 2RB_{\text{BWP}}^{\text{offset}} - 2\lfloor r_{\text{PUCCH}}/N_{\text{CS}} \rfloor, \quad N_{\text{BWP}}^{\text{size}} - 5 - 2RB_{\text{BWP}}^{\text{offset}} - 2\lfloor r_{\text{PUCCH}}/$$

$$N_{\text{CS}} \rfloor, \quad N_{\text{BWP}}^{\text{size}} - 7 - 2RB_{\text{BWP}}^{\text{offset}} - 2\lfloor r_{\text{PUCCH}}/N_{\text{CS}} \rfloor, \quad N_{\text{BWP}}^{\text{size}} + 1 - 2RB_{\text{BWP}}^{\text{offset}} - 2\lfloor r_{\text{PUCCH}}/N_{\text{CS}} \rfloor$$

,

$$N_{\text{BWP}}^{\text{size}} + 2 - 2RB_{\text{BWP}}^{\text{offset}} - 2\lfloor r_{\text{PUCCH}}/N_{\text{CS}} \rfloor, \quad N_{\text{BWP}}^{\text{size}} + 3 - 2RB_{\text{BWP}}^{\text{offset}} - 2\lfloor r_{\text{PUCCH}}/N_{\text{CS}} \rfloor, \quad N_{\text{BWP}}^{\text{size}} +$$

$$5 - 2RB_{\text{BWP}}^{\text{offset}} - 2\lfloor r_{\text{PUCCH}}/N_{\text{CS}} \rfloor$$, and the like.

For example, the candidate values of the second parameter may be 2, 4, -2, and -4. For another example, the candidate values of the second parameter may be 4, 6, $N_{\text{BWP}}^{\text{size}} - 3 - 2RB_{\text{BWP}}^{\text{offset}} - 2\lfloor r_{\text{PUCCH}}/N_{\text{CS}} \rfloor$, and

$$N_{BWP}^{size} - 5 - 2RB_{BWP}^{offset} - 2\lfloor r_{PUCCH}/N_{CS} \rfloor$$

In one case, the terminal device may determine the first resource based on the second parameter, the second offset, $r_{PUCCH}$, and $N_{CS}$.

For example, an index of the first resource may be based on Formula (5), which is expressed as follows:

$$RB_{BWP}^{offset} + \lfloor r_{PUCCH}/N_{CS} \rfloor + \text{second parameter} \quad (5)$$

For another example, an index of the first resource may be based on Formula (6), which is expressed as follows:

$$\widetilde{RB_{BWP}^{offset}} + \lfloor r_{PUCCH}/N_{CS} \rfloor \quad (6)$$

$$\widetilde{RB_{BWP}^{offset}} = RB_{BWP}^{offset} + \text{second parameter}$$

It should be understood that the foregoing description is an example of determining the first resource based on the second parameter, the second offset, $r_{PUCCH}$, and $N_{CS}$, and does not limit a specific manner of determining the first resource based on the second parameter, the second offset, $r_{PUCCH}$, and $N_{CS}$. For example, the first resource may be based on various variants of Formula (5) or Formula (6). For another example, the first resource may be based on another formula, provided that the first formula directly or indirectly includes the four pieces of information: the second parameter, the second offset, $r_{PUCCH}$, and $N_{CS}$.

In another case, the terminal device may determine the first resource based on the second parameter, the second offset, $N_{BWP}^{size}$, $r_{PUCCH}$, and $N_{CS}$.

For example, an index of the first resource may be based on Formula (7), which is expressed as follows:

$$N_{BWP}^{size} - 1 - RB_{BWP}^{offset} - \lfloor r_{PUCCH}/N_{CS} \rfloor - \text{second parameter} \quad (7)$$

For another example, an index of the first resource may be based on Formula (8), which is expressed as follows:

$$N_{BWP}^{size} - 1 - \widetilde{RB_{BWP}^{offset}} - \lfloor r_{PUCCH}/N_{CS} \rfloor \quad (8)$$

$$\widetilde{RB_{BWP}^{offset}} = RB_{BWP}^{offset} + \text{second parameter}$$

It should be understood that the foregoing description is an example of determining the first resource based on the second parameter, the second offset, $N_{BWP}^{size}$, $r_{PUCCH}$, and $N_{CS}$, and does not limit a specific manner of determining the first resource based on the second parameter, the second offset, $N_{BWP}^{size}$, $r_{PUCCH}$, $N_{CS}$. For example, the first resource may be based on various variants of Formula (7) or Formula (8). For another example, the first resource may be based on another formula, provided that the first formula directly or indirectly includes the four pieces of information: $N_{BWP}^{size}$, $r_{PUCCH}$, $N_{CS}$, the second parameter, and the second offset.

The second parameter may be protocol-specified, that is, configured by default. Alternatively, the second parameter may be configured by the access network device. In this case, the access network device may send indication information to the terminal device, where the indication information indicates the second parameter. Correspondingly, the terminal device may receive the indication information from the access network device, and may determine the second parameter based on the indication information.

The indication information may indicate the second parameter through an index of the second parameter, or may indicate the second parameter through other information of the second parameter. This is not limited herein. The index of the second parameter may be an index of the second parameter in all possible values of the second parameter, or may be an index of the second parameter in some values included in all possible values of the second parameter.

For example, a protocol specifies four candidate values of the second parameter, for example, 2, 4,

$$N_{BWP}^{size} - 5 - 2RB_{BWP}^{offset} - 2\lfloor r_{PUCCH}/N_{CS}\rfloor$$ , and $$N_{BWP}^{size} - 9 - 2RB_{BWP}^{offset} - 2\lfloor r_{PUCCH}/N_{CS}\rfloor$$ . In this case, the indication information may indicate the second parameter by using 2 bits. For example, the indication information being 00 may indicate that the second parameter is 2. For example, the indication information being 01 may indicate that the second parameter is 4. For example, the indication information being 10 may indicate that the second parameter is $$N_{BWP}^{size} + 1 - 2RB_{BWP}^{offset} - 2\lfloor r_{PUCCH}/N_{CS}\rfloor$$ . For example, the indication information being 11 may indicate that the second parameter is $$N_{BWP}^{size} + 3 - 2RB_{BWP}^{offset} - 2\lfloor r_{PUCCH}/N_{CS}\rfloor$$ .

It should be understood that, the foregoing description is an example in which the index of the second parameter is an index of the second parameter in some values included in all possible values of the second parameter, and constitutes no limitation. For example, the candidate values of the second parameter may be another value such as 5, 6, or 7.

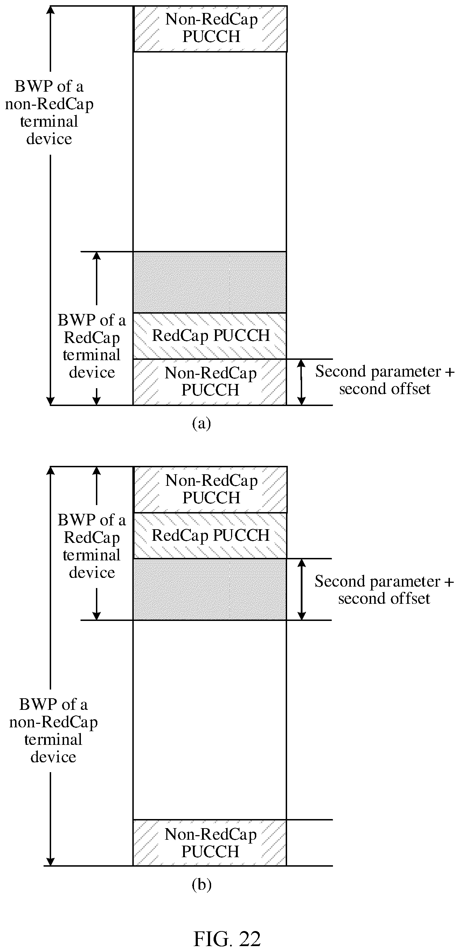

When the index of the first resource is determined, a start resource of the BWP of the terminal device may be used as a reference point. FIG. 22 is a diagram of using a start resource of a BWP of a terminal device as a reference point according to an embodiment of this application. As shown in (a) in FIG. 22, to enable a first resource to be located at a lower edge of a BWP of a terminal device, that is, before a center frequency of the BWP of the terminal device, a second parameter may be set to at least one of 0, 2, 3, 4, or 6, to avoid resource fragmentation due a PUCCH being in the middle of a carrier. As shown in (b) in FIG. 22, to enable a first resource to be located at an upper edge of a BWP of a terminal device, that is, after a center frequency of the BWP of the terminal device, a second parameter may be set to at least one of

$$N_{BWP}^{size} - 1 - 2RB_{BWP}^{offset} - 2\lfloor r_{PUCCH}/N_{CS}\rfloor \quad , \quad N_{BWP}^{size} - 3 - 2RB_{BWP}^{offset} - 2\lfloor r_{PUCCH}/N_{CS}\rfloor \quad , \quad N_{BWP}^{size} - 4 - 2RB_{BWP}^{offset} - 2\lfloor r_{PUCCH}/N_{CS}\rfloor \quad , \quad N_{BWP}^{size} - 5 - 2RB_{BWP}^{offset} - 2\lfloor r_{PUCCH}/N_{CS}\rfloor$$ , or

$$N_{BWP}^{size} - 7 - 2RB_{BWP}^{offset} - 2\lfloor r_{PUCCH}/N_{CS}\rfloor$$ , to avoid resource fragmentation due a PUCCH being in the middle of a carrier.

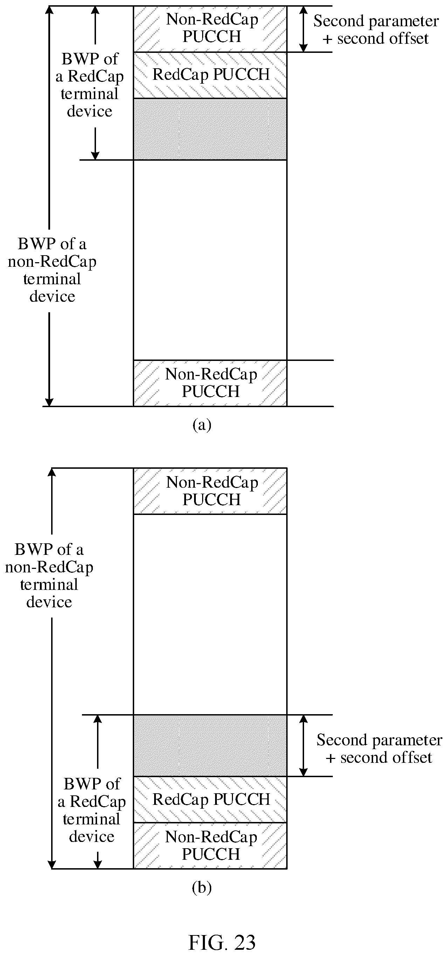

When the index of the first resource is determined, an end resource of the BWP of the terminal device may alternatively be used as a reference point. FIG. 23 is a diagram of using an end resource of a BWP of a terminal device as a reference point according to an embodiment of this application. As shown in (a) in FIG. 23, to enable a first resource to be located at a lower edge of a BWP of a terminal device, that is, before a center frequency of the BWP of the terminal device, a second parameter may be set to at least one of 0, 2, 3, 4, 6, -2, -3, -4, or -6, to avoid resource fragmentation due a PUCCH being in the middle of a carrier. As shown in (b) in FIG. 23, to enable a first resource to be located at an upper edge of a BWP of a terminal device, that is, after a center frequency of the BWP of the terminal device, a second parameter may be set to at least one of

$$N_{BWP}^{size} + 1 - 2RB_{BWP}^{offset} - 2\lfloor r_{PUCCH}/N_{CS}\rfloor \, , \, N_{BWP}^{size} + 2 - 2RB_{BWP}^{offset} - 2\lfloor r_{PUCCH}/N_{CS}\rfloor \, , \, N_{BWP}^{size} + 3 - 2RB_{BWP}^{offset} - 2\lfloor r_{PUCCH}/N_{CS}\rfloor \, , \, N_{BWP}^{size} + 5 - 2RB_{BWP}^{offset} - 2\left\lfloor \frac{r_{PUCCH}}{N_{CS}} \right\rfloor , N_{BWP}^{size} + 1 - 2RB_{BWP}^{offset} - 2\lfloor r_{PUCCH}/N_{CS}\rfloor, \, N_{BWP}^{size} + 2 - 2RB_{BWP}^{offset} - 2\lfloor r_{PUCCH}/N_{CS}\rfloor, \, N_{BWP}^{size} + 3 - 2RB_{BWP}^{offset} - 2\lfloor r_{PUCCH}/N_{CS}\rfloor \, , \, N_{BWP}^{size} + 5 - 2RB_{BWP}^{offset} - 2\left\lfloor \frac{r_{PUCCH}}{N_{CS}} \right\rfloor, -(N_{BWP}^{size} - 1 - 2RB_{BWP}^{offset} - 2\lfloor r_{PUCCH}/N_{CS}\rfloor)$$ ,

$$-(N_{BWP}^{size} - 3 - 2RB_{BWP}^{offset} - 2\lfloor r_{PUCCH}/N_{CS}\rfloor) \quad , \quad -(N_{BWP}^{size} - 4 - 2RB_{BWP}^{offset} - 2\lfloor r_{PUCCH}/N_{CS}\rfloor)$$

$$-(\mathrm{N_{BWP}^{size}} - 5 - 2\mathrm{RB_{BWP}^{offset}} - 2\lfloor r_{PUCCH}/N_{CS} \rfloor)$$ , or $$-(N_{BWP}^{size} - 7 - 2RB_{BWP}^{offset} - 2\lfloor r_{PUCCH}/N_{CS} \rfloor)$$ ,

to avoid resource fragmentation due a PUCCH being in the middle of a carrier.

2102: The access network device determines a first resource based on the second parameter and the second offset.

A manner in which the access network device determines the first resource based on the second parameter and the second offset is the same as a manner in which the terminal device determines the first resource based on the second parameter and the second offset. For detailed descriptions, refer to step 2101. Details are not described herein again.

2103: The terminal device sends a PUCCH to the access network device on the first resource.

Correspondingly, the access network device receives the PUCCH from the terminal device on the first resource.

After determining the first resource, the terminal device may send the PUCCH to the access network device on the first resource. The feedback information for the Msg4 is carried on the PUCCH, and the Msg4 is used for contention resolution.

It should be understood that, for related descriptions of same information or corresponding information in different steps, different locations, or different embodiments in the foregoing communication method, reference may be made to each other.

It should be understood that a function performed by the terminal device in the foregoing communication method may also be performed by a module (for example, a chip) in the terminal device, and a function performed by the access network device in the foregoing communication method may also be performed by a module (for example, a chip) in the access network device.

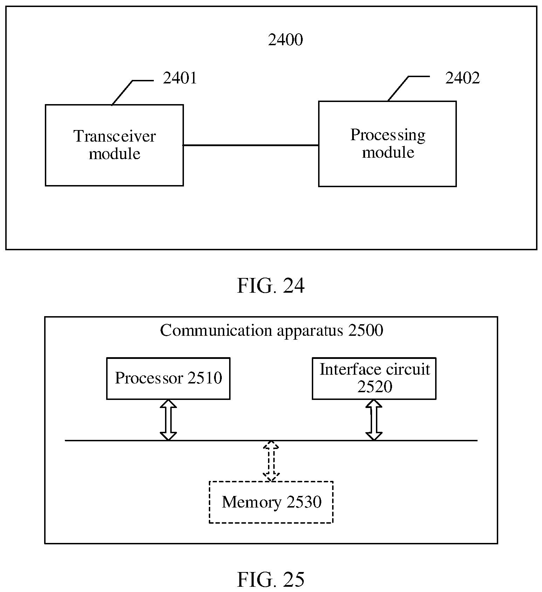

FIG. 24 and FIG. 25 are diagrams of structures of possible communication apparatuses according to embodiments of this application. The communication apparatuses may implement functions of the terminal device or the access network device in the foregoing method embodiments. Therefore, beneficial effects of the foregoing method embodiments can also be implemented. In this embodiment of this application, the communication apparatus may be the terminal device 101 shown in FIG. 1, may be the access network device 102 shown in FIG. 1, or may be a module (such as a chip) used in the terminal device or the access network device.

As shown in FIG. 24, a communication apparatus 2400 includes a transceiver module 2401 and a processing module 2402. The communication apparatus 2400 may be configured to implement a function of the terminal device or the access network device in the method embodiment shown in FIG. 2, FIG. 18, or FIG. 21.

When the communication apparatus 2400 is configured to implement a function of the terminal device in the method embodiment in FIG. 2 or FIG. 18, the processing module 2402 is configured to determine a random access resource. The transceiver module 2401 is configured to send a PRACH on the random access resource.

When the communication apparatus 2400 is configured to implement a function of the access network device in the method embodiment in FIG. 2 or FIG. 18, the processing module 2402 is configured to determine a random access resource; and the transceiver module 2401 is configured to receive a PRACH on the random access resource.

When the communication apparatus 2400 is configured to implement a function of the terminal device in the method embodiment in FIG. 21, the processing module 2402 is configured to determine a first resource based on a second parameter and a second offset. The transceiver module 2401 is configured to send a PUCCH on the first resource.

When the communication apparatus 2400 is configured to implement a function of the access network device in the method embodiment in FIG. 21, the processing module 2402 is configured to determine a first resource based on a second parameter and a second offset. The transceiver module 2401 is configured to receive a PUCCH on the first resource.

For more detailed descriptions of the transceiver module 2401 and the processing module 2402, refer to related descriptions in the foregoing method embodiments. Details are not described herein again.

As shown in FIG. 25, a communication apparatus 2500 includes a processor 2510 and an interface circuit 2520. The processor 2510 and the interface circuit 2520 are coupled to each other. It may be understood that the interface circuit 2520 may be a transceiver or an input/output interface. Optionally, the communication apparatus 2500 may further include a memory 2530, configured to: store instructions executed by the processor 2510, store input data needed by the processor 2510 to run instructions, or store data generated after the processor 2510 runs instructions.

When the communication apparatus 2500 is configured to implement a method in the foregoing method embodiments, the processor 2510 is configured to perform a function of the foregoing processing module 2402, and the interface circuit 2520 is configured to perform a function of the foregoing transceiver module 2401.

When the communication apparatus is a chip used in the terminal device, the chip in the terminal device implements the function of the terminal device in the foregoing method embodiments. The chip in the terminal device receives information from another module (for example, a radio frequency module or an antenna) in the terminal device, where the information is sent by the access network device to the terminal device. Alternatively, the chip in the terminal device sends information to another module (for example, a radio frequency module or an antenna) in the terminal device, where the information is sent by the terminal device to the access network device.

When the communication apparatus is a chip used in the access network device, the chip in the access network device implements the function of the access network device in the foregoing method embodiments. The chip in the access network device receives information from another module (for example, a radio frequency module or an antenna) in the access network device, where the information is sent by the terminal device to the access network device. Alternatively, the chip in the access network device sends information to another module (for example, a radio frequency module or an antenna) in the access network device, where the information is sent by the access network device to the terminal device.

It may be understood that the processor in embodiments of this application may be a central processing unit (central processing unit, CPU), may be another general purpose processor, a digital signal processor (digital signal processor, DSP), an application-specific integrated circuit (application specific integrated circuit, ASIC), or the like.

An embodiment of this application further discloses a computer-readable storage medium. The computer-readable storage medium stores a computer program or computer instructions. When the computer program or the computer instructions runs/run on a computer, the method in the foregoing method embodiments is performed.

An embodiment of this application further discloses a computer program product including a computer program or computer instructions. When the computer program or the computer instructions runs/run on a computer, the method in the foregoing method embodiments is performed.

The objectives, technical solutions, and benefits of this application are further described in detail in the foregoing specific implementations. It should be understood that the foregoing descriptions are merely specific implementations of this application, but are not intended to limit the protection scope of this application. Any modification, equivalent replacement, or improvement made based on the technical solutions of this application shall fall within the protection scope of this application.

**Claims**

1. A communication method, comprising:

   determining a random access resource, wherein a quantity of frequency domain resources of the random access resource is greater than a quantity of frequency domain resources of a maximum transmission bandwidth of a terminal device; and
   sending a physical random access channel PRACH on the random access resource.

2. The method according to claim 1, wherein the determining a random access resource comprises:

   determining the random access resource based on a first parameter and a first reference point, wherein
   the first reference point is a carrier resource, a point A, a common resource block CRB 0, or a bandwidth part BWP resource of the terminal device; and
   the first parameter indicates:

      an offset value between the random access resource and the first reference point; or
      a location relationship between the random access resource and the first reference point.

3. The method according to claim 1, wherein

   a BWP of the terminal device does not comprise A frequency domain resources with highest sequence numbers in a carrier, a start resource of the random access resource is the same as a start resource of the BWP, and an end resource of the random access resource is after an end resource of the BWP; or
   a BWP of the terminal device comprises A frequency domain resources with highest sequence numbers in a carrier, a start resource of the random access resource is before a start resource of the BWP, and an end resource of the random access resource is the same as an end resource of the BWP; or
   a BWP of the terminal device does not comprise A frequency domain resources with lowest sequence numbers in a carrier, a start resource of the random access resource is before a start resource of the BWP, and an end resource of the random access resource is the same as an end resource of the BWP; or
   a BWP of the terminal device comprises A frequency domain resources with lowest sequence numbers in a carrier, a start resource of the random access resource is the same as a start resource of the BWP, and an end resource of the random access resource is after an end resource of the BWP, wherein
   A is a positive integer greater than 0.

4. The method according to claim 1, wherein the quantity of frequency domain resources of the random access resource comprises a quantity of frequency domain resources of a first resource and a quantity of frequency domain resources of a second resource, a random access preamble sequence is carried on the PRACH, and the sending a PRACH on the random access resource comprises:

   sending a first PRACH on a frequency domain resource corresponding to the quantity of frequency domain resources of the first resource; and
   sending a second PRACH on a frequency domain resource corresponding to the quantity of frequency domain resources of the second resource, wherein
   a first part of the random access preamble sequence is carried on the first PRACH, a second part of the random access preamble sequence is carried on the second PRACH, and the first part and the second part are a part or all of the random access preamble sequence.

5. The method according to claim 1, wherein the random access resource comprises a first resource and a second resource, the quantity of frequency domain resources of the random access resource comprises a quantity of frequency domain resources of the first resource and a quantity of frequency domain resources of the second resource, a difference between a time domain resource of the first resource and a time domain resource of the second resource is k time units, and k is an integer greater than or equal to 1.

6. A communication method, comprising:

   determining a random access resource, wherein a quantity of frequency domain resources of the random access resource is greater than a quantity of frequency domain resources of a maximum transmission bandwidth of a terminal device; and
   receiving a physical random access channel PRACH on the random access resource.

7. The method according to claim 6, wherein the determining a random access resource comprises:

   determining the random access resource based on a first parameter and a first reference point, wherein
   the first reference point is a carrier resource, a point A, a common resource block CRB 0, or a bandwidth part BWP resource of the terminal device; and
   the first parameter indicates:

      an offset value between the random access resource and the first reference point; or
      a location relationship between the random access resource and the first reference point.

8. The method according to claim 6, wherein

   a BWP of the terminal device does not comprise A frequency domain resources with highest sequence numbers in a carrier, a start resource of the random access resource is the same as a start resource of the BWP, and an end resource of the random access resource is after an end resource of the BWP; or
   a BWP of the terminal device comprises A frequency domain resources with highest sequence numbers in a carrier, a start resource of the random access resource is before a start resource of the BWP, and an end resource of the random access resource is the same as an end resource of the BWP; or
   a BWP of the terminal device does not comprise A frequency domain resources with lowest sequence numbers in a carrier, a start resource of the random access resource is before a start resource of the BWP, and an end resource of the random access resource is the same as an end resource of the BWP; or
   a BWP of the terminal device comprises A frequency domain resources with lowest sequence numbers in a carrier, a start resource of the random access resource is the same as a start resource of the BWP, and an end resource of the random access resource is after an end resource of the BWP, wherein
   A is a positive integer greater than 0.

9. The method according to claim 6, wherein the quantity of frequency domain resources of the random access resource comprises a quantity of frequency domain resources of a first resource and a quantity of frequency domain resources of a second resource, a random access preamble sequence is carried on the PRACH, and the receiving a PRACH on the random access resource comprises:

   receiving a first PRACH on a frequency domain resource corresponding to the quantity of frequency domain resources of the first resource; and

receiving a second PRACH on a frequency domain resource corresponding to the quantity of frequency domain resources of the second resource, wherein

a first part of the random access preamble sequence is carried on the first PRACH, a second part of the random access preamble sequence is carried on the second PRACH, and the first part and the second part are a part or all of the random access preamble sequence.

10. The method according to claim 6, wherein the random access resource comprises a first resource and a second resource, the quantity of frequency domain resources of the random access resource comprises a quantity of frequency domain resources of the first resource and a quantity of frequency domain resources of the second resource, a difference between a time domain resource of the first resource and a time domain resource of the second resource is k time units, and k is an integer greater than or equal to 1.

11. A communication method, comprising:

determining, by a terminal device, a first resource based on a second parameter and a second offset, wherein candidate values of the second parameter are 0, 2, 3, 4, and 6, and the second offset is an offset of a PRB in the case of calculation of a transmission resource of a PUCCH; and

sending, by the terminal device, a physical uplink control channel PUCCH to an access network device on the first resource, wherein the PUCCH carries feedback information for a message Msg4, and the Msg4 is used for contention resolution.

12. The method according to claim 11, wherein an index of the first resource satisfies the following formula:

$$RB_{BWP}^{offset} + \lfloor r_{PUCCH}/N_{CS} \rfloor + \text{second parameter,}$$

wherein

$RB_{BWP}^{offset}$ represents the second offset, $r_{PUCCH}$ represents an index of a PUCCH resource that is to be used by the terminal device and that is indicated by using signaling, and $N_{CS}$ represents a total quantity of initial cyclic indexes comprised in an initial cyclic shift index set.

13. The method according to claim 11, wherein an index of the first resource satisfies the following formula:

$$N_{BWP}^{size} - 1 - RB_{BWP}^{offset} - \lfloor r_{PUCCH}/N_{CS} \rfloor - \text{second parameter,}$$

wherein

$N_{BWP}^{size}$ represents a quantity of frequency domain resources or a quantity of RBs comprised in a BWP of the terminal device, $RB_{BWP}^{offset}$ represents the second offset, $r_{PUCCH}$ represents an index of a PUCCH resource that is to be used by the terminal device and that is indicated by using signaling, and $N_{CS}$ represents a total quantity of initial cyclic indexes comprised in an initial cyclic shift index set.

14. A communication method, comprising:

determining, by an access network device, a first resource based on a second parameter and a second offset, wherein candidate values of the second parameter are 0, 2, 3, 4, and 6, and the second offset is an offset of a PRB in the case of calculation of a transmission resource of a PUCCH; and

receiving, by the access network device, a physical uplink control channel PUCCH from a terminal device on the first resource, wherein the PUCCH carries feedback information for a message Msg4, and the Msg4 is used for contention resolution.

15. The method according to claim 14, wherein an index of the first resource satisfies the following formula:

$$RB_{BWP}^{offset} + \lfloor r_{PUCCH}/N_{CS} \rfloor + \text{second parameter,}$$

wherein

$RB_{BWP}^{offset}$ represents the second offset, $r_{PUCCH}$ represents an index of a PUCCH resource that is to be used by the terminal device and that is indicated by using signaling, and $N_{CS}$ represents a total quantity of initial cyclic indexes comprised in an initial cyclic shift index set.

16. The method according to claim 14, wherein an index of the first resource satisfies the following formula:

$$N_{BWP}^{size} - 1 - RB_{BWP}^{offset} - \lfloor r_{PUCCH}/N_{CS} \rfloor - \text{second parameter,}$$

wherein

$N_{BWP}^{size}$ represents a quantity of frequency domain resources or a quantity of RBs comprised in a BWP of the terminal device, $RB_{BWP}^{offset}$ represents the second offset, $r_{PUCCH}$ represents an index of a PUCCH resource that is to be used by the terminal device and that is indicated by using signaling, and $N_{CS}$ represents a total quantity of initial cyclic indexes comprised in an initial cyclic shift index set.

17. A communication apparatus, comprising units configured to perform the method according to any one of claims 1 to 5, 6 to 10, 11 to 13, or 14 to 16.

18. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus; and the processor is configured to implement, by using a logic circuit or executing code instructions, the method according to any one of claims 1 to 5, 6 to 10, 11 to 13, or 14 to 16.

19. A computer-readable storage medium, wherein the computer-readable storage medium stores a computer program or computer instructions, and when the computer program or the computer instructions is/are run, the method according to any one of claims 1 to 5, 6 to 10, 11 to 13, or 14 to 16 is implemented.

20. A computer program product, wherein the computer program product comprises computer program code, and when the computer program code is run, the method according to any one of claims 1 to 5, 6 to 10, 11 to 13, or 14 to 16 is implemented.

FIG. 1

FIG. 2

BWP

Random access
resource

Offset
value

Carrier

FIG. 3

BWP

Random access
resource

Offset
value

Carrier

FIG. 4

BWP (11 RBs)

| 0 | 1 | 2 | 3 | 4 | 5 | 6 | 7 | 8 | 9 | 10 | 11 |

Random access resource (12 RBs)

FIG. 5

| BWP (11 RBs) | | | | | | | | | | | |
|---|---|---|---|---|---|---|---|---|---|---|---|
| 0 | 1 | 2 | 3 | 4 | 5 | 6 | 7 | 8 | 9 | 10 | 11 |

Random access resource (12 RBs)

FIG. 6

Channel bandwidth (5 MHz)

Guard band
505 kHz

BWP (11 RBs)

Guard band
505 kHz

Random access
resource
(12 RBs/139
subcarriers)

FIG. 7

Random access resource (12 RBs/144 subcarriers)

| 0 | 1 | 2 | 3 | 4 | 5 | 6 | 7 | 8 | 9 | 10 | 11 |

| 0 | 1 | 2 | 3 | 4 | 5 | 6 | 7 | 8 | 9 | 10 | 11 |

12 subcarriers included in an RB 0

...

| 0 | 1 | 2 | 3 | 4 | 5 | 6 | 7 | 8 | 9 | 10 | 11 |

12 subcarriers included in an RB 11

FIG. 8

BWP (11 RBs)

| 0 | 1 | 2 | 3 | 4 | 5 | 6 | 7 | 8 | 9 | 10 |

12 subcarriers

12 subcarriers

| 0 | 1 | 2 | 3 | 4 | 5 | 6 | 7 | 8 | 9 | 10 | 11 |

...

| 0 | 1 | 2 | 3 | 4 | 5 | 6 | 7 | 8 | 9 | 10 | 11 |

FIG. 9

EP 4 462 909 A1

BWP (11 RBs)

| 0 | 1 | 2 | 3 | 4 | 5 | 6 | 7 | 8 | 9 | 10 |

12 subcarriers

| 0 | 1 | 2 | 3 | 4 | 5 | 6 | 7 | 8 | 9 | 10 | 11 |

...

12 subcarriers

| 0 | 1 | 2 | 3 | 4 | 5 | 6 | 7 | 8 | 9 | 10 | 11 |

FIG. 10

EP 4 462 909 A1

BWP (11 RBs)

| 0 | 1 | 2 | 3 | 4 | 5 | 6 | 7 | 8 | 9 | 10 |

12 subcarriers

| 0 | 1 | 2 | 3 | 4 | 5 | 6 | 7 | 8 | 9 | 10 | 11 |

...

12 subcarriers

| 0 | 1 | 2 | 3 | 4 | 5 | 6 | 7 | 8 | 9 | 10 | 11 |

FIG. 11

BWP (11 RBs)

| 0 | 1 | 2 | 3 | 4 | 5 | 6 | 7 | 8 | 9 | 10 |

12 subcarriers

| 0 | 1 | 2 | 3 | 4 | 5 | 6 | 7 | 8 | 9 | 10 | 11 |

12 subcarriers

| 0 | 1 | 2 | 3 | 4 | 5 | 6 | 7 | 8 | 9 | 10 | 11 |

12 subcarriers

| 0 | 1 | 2 | 3 | 4 | 5 | 6 | 7 | 8 | 9 | 10 | 11 |

...

FIG. 12

FIG. 13

FIG. 14

FIG. 15

FIG. 16

FIG. 17

FIG. 18

FIG. 19

BWP of a
non-RedCap
terminal
device

BWP of a
RedCap
terminal
device

Second offset

FIG. 20

Terminal
device

Access
network
device

2101: Determine a first
resource based on a second
parameter and a second
offset

2102: Determine a first
resource based on the
second parameter and the
second offset

2103: Send a PUCCH on
the first resource

FIG. 21

FIG. 22

(a)

(b)

FIG. 23

2400

2401

2402

Transceiver module

Processing module

FIG. 24

Communication apparatus 2500

Processor 2510

Interface circuit 2520

Memory 2530

FIG. 25

## INTERNATIONAL SEARCH REPORT

| International application No. |
|---|
| **PCT/CN2022/114140** |

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W,H04L

Documentation searched other than minimum documentation to the extent that such documents are included in the fields searched

Electronic data base consulted during the international search (name of data base and, where practicable, search terms used)

CNTXT, CNKI, ENTXT, 3GPP, VEN: 随机接入资源, 随机接入, 最大传输带宽, 最大带宽, 大于, 第一, 第二, 多个, 资源, 物理随机接入信道, 物理上行控制信道, 偏移, physical random access channel, PRACH, maximum, bandwidth part, BWP, first, second, resource, channel, PUCCH, random access, PUCCH, msg4, offset

### C. DOCUMENTS CONSIDERED TO BE RELEVANT

| Category* | Citation of document, with indication, where appropriate, of the relevant passages | Relevant to claim No. |
|---|---|---|
| X | CN 107690173 A (CHINA ACADEMY OF TELECOMMUNICATIONS TECHNOLOGY) 13 February 2018 (2018-02-13) description, paragraphs 156-167 and 263-286, and figures 2 and 12-13 | 1-3, 6-8, 17-20 |
| A | CN 109891994 A (LG ELECTRONICS INC.) 14 June 2019 (2019-06-14) entire document | 1-20 |
| A | CN 109644432 A (GUANGDONG OPPO MOBILE COMMUNICATIONS CO., LTD.) 16 April 2019 (2019-04-16) entire document | 1-20 |
| A | US 2015373740 A1 (TELEFONAKTIEBOLAGET L M ERICSSON (PUBL)) 24 December 2015 (2015-12-24) entire document | 1-20 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 October 2022** | **02 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/114140**

| Patent document cited in search report | | | Publication date (day/month/year) | Patent family member(s) | | | Publication date (day/month/year) |
|---|---|---|---|---|---|---|---|
| CN | 107690173 | A | 13 February 2018 | KR | 20190034329 | A | 01 April 2019 |
| | | | | WO | 2018024011 | A1 | 08 February 2018 |
| | | | | US | 2019182872 | A1 | 13 June 2019 |
| | | | | JP | 2019527990 | A | 03 October 2019 |
| | | | | EP | 3496500 | A4 | 12 June 2019 |
| CN | 109891994 | A | 14 June 2019 | US | 2019281635 | A1 | 12 September 2019 |
| | | | | WO | 2018084618 | A1 | 11 May 2018 |
| | | | | EP | 3537832 | A1 | 11 September 2019 |
| CN | 109644432 | A | 16 April 2019 | WO | 2018120103 | A1 | 05 July 2018 |
| | | | | TW | 201824930 | A | 01 July 2018 |
| US | 2015373740 | A1 | 24 December 2015 | WO | 2014112905 | A1 | 24 July 2014 |
| | | | | EP | 2946628 | A1 | 25 November 2015 |
| | | | | CN | 104919885 | A | 16 September 2015 |

Form PCT/ISA/210 (patent family annex) (January 2015)

**EP 4 462 909 A1**

**Patent documents cited in the description**

- CN 202210130601